# EUROPEAN PATENT SPECIFICATION

(11) **EP 3 244 747 B1**
(45) Date of publication and mention of the grant of the patent: **26.01.2022**
(21) Application number: 16737684.7
(22) Date of filing: 11.01.2016
(51) Int. Cl.: A23F 5/24, A47J 31/18, A47J 31/06

(54) **COFFEE MAKER WITH FEATURES FOR RAPID AND/OR MULTIPLE EXTRACTION PROCESSES, AND ASSOCIATED SYSTEMS AND METHODS**
KAFFEEMASCHINE MIT FUNKTION FÜR SCHNELLES UND/ODER MEHRFACHES EXTRAKTIONSVERFAHREN SOWIE ENTSPRECHENDE SYSTEME UND VERFAHREN
MACHINE À CAFÉ DOTÉE DE FONCTIONS POUR DES PROCÉDÉS D'EXTRACTION RAPIDES ET/OU MULTIPLES, AINSI QUE SYSTÈMES ET PROCÉDÉS ASSOCIÉS

(30) Priority: 12.01.2015 US 201514594970; 04.06.2015 US 201562171190 P; 14.12.2015 US 201562267185 P
(43) Date of publication of application: 22.11.2017
(60) Divisional application: 21206886.0
(73) Proprietor: Voga Coffee, Inc., Wyomissing, PA 19610 (US)
(72) Inventor: AVINS, Joshua, Lewis, San Francisco, CA 94122 (US); SALOMON, Eli, San Francisco, CA 94114 (US); LOFTNESS, Paul, Evan, Gibbon, MN 55335 (US); DAGUE, Randy, C., Darwin, MN 55324 (US); EUGENE, Joseph, Hutchinson, MN 55350 (US)
(74) Representative: Forresters IP LLP
(86) International application number: PCT/US2016/012910
(87) International publication number: WO 2016/115055

(56) References cited:
- US-A- 2 223 450
- US-A- 2 550 513
- US-A- 2 660 948
- US-A- 2 660 948
- US-A- 2 888 349
- US-A- 3 224 360
- US-A- 4 158 067
- US-A- 4 277 509
- US-A- 4 739 697
- US-A- 5 267 506
- US-A1- 2008 280 023
- US-A1- 2010 278 988
- US-B1- 6 391 360
- US-B2- 6 697 903

## Description

### TECHNICAL FIELD

The present technology is directed generally to coffee makers that produce coffee via rapid extractions and/or multiple extractions from a single set of grinds, and associated systems and methods. Results can include flavorful coffee that requires fewer grinds to produce.

### BACKGROUND

Coffee has been a commonly-consumed beverage for many years. Over the course of time, many techniques have been developed to brew coffee, with each having its own advantages and disadvantages. For example, siphon coffee brewers were developed in the 1830's and were known to produce flavorful coffee, with little bitterness. However, the siphon brewers typically required a long extraction process, which made them impractical for busy coffee shops. Percolators were initially developed in the 1800's, and became popular in the first half of the twentieth century. Percolators also produce flavorful coffee, unless the brewed coffee is left on high heat for too long a period of time, in which case the coffee can acquire a bitter taste. Percolators have largely been replaced with drip coffee makers, which are simple and produce acceptable coffee. Other representative coffee makers include the Aeropress^{®} and Steampunk coffee maker.

One drawback associated with the foregoing types of coffee makers is that none adequately combine low cost with high speed and efficient use of coffee beans. Consumer demand for flavorful, non-bitter coffee has increased over the past several decades, while the resources required to grow high quality coffee beans have become more scarce, particularly in view of environmental concerns associated with coffee plantations. Accordingly, there remains a need for coffee makers and associated processes that meet the foregoing objectives of low cost, high speed, and high quality.

US2660948 discloses an automatic coffee-making machine. US2010278988 discloses an infusion brewing device that has a steeping area configured and adapted to receive a filter, particulate steeping material and hot liquid water for steeping the particulate steeping material into an infusion. A vacuum chamber is positioned below the steeping area. The vacuum chamber has a hermetic wall, a closable lower outlet, and an upper opening leading to the steeping area. An inlet of a vacuum conduit is positioned in the vacuum chamber, above a maximum liquid level of the vacuum chamber and whereas an outlet thereof is connected to a vacuum source. The inlet is spaced from the wall by an inlet spacing distance. The vacuum source is operable to reduce the pressure in the vacuum chamber in a manner to draw the infusion through the filter and upper opening.

The present invention provides a system and method as claimed.

### BRIEF DESCRIPTION OF THE DRAWINGS

Figure 1 is a partially schematic, side elevation view of a system for making coffee, configured in accordance with an embodiment of the present technology.
Figure 2 is a flow diagram illustrating a process for brewing coffee in accordance with an embodiment of the present technology.
Figure 3 illustrates the system of Figure 1, with ground coffee placed in a brew chamber, in accordance with an embodiment of the present technology.
Figure 4 illustrates the system of Figure 3, with water added to the brew chamber in accordance with an embodiment of the present technology.
Figure 5 illustrates the system of Figure 4, with the water and ground coffee agitated in accordance with and embodiment of the present technology.
Figure 6 illustrates the system of Figure 5, with coffee being extracted from the brew chamber to a coffee chamber in accordance with an embodiment of the present technology.
Figure 7 is a partially schematic illustration of the system shown in Figure 6 with a second volume of water positioned to undergo a second brewing process and a second extraction process in accordance with an embodiment of the present technology.
Figure 8 is a partially schematic, cross-sectional illustration of a brew chamber having a filter device configured in accordance with an embodiment of the present technology.
Figure 9 is a partially schematic, cross-sectional illustration of a brew chamber configured to be pressurized in accordance with an embodiment of the present technology.
Figure 10 is a schematic illustration of an automated coffee making system configured in accordance with another embodiment of the present technology.
Figure 11 is a partially schematic illustration of a system having a brew chamber that includes a grind basket fitted with a filter that holds the coffee grinds in accordance with another embodiment of the present technology.
Figure 12 is a partially schematic illustration of a representative example of a siphon coffee system that includes a brew chamber forming an upper or top chamber of the system in accordance with another embodiment of the present technology.
Figure 13A is a diagram that illustrates how components of the system can be inter-connected in accordance with embodiments of the present technology.
Figures 13B and 13C are diagrams of representative coffee brewing methods, in accordance with particular embodiments of the present technology.
Figure 14 is a partially schematic illustration of a system having a modified French press arrangement designed to allow for one or more accelerated extractions in accordance with an embodiment of the present technology.
Figure 15 is a partially schematic illustration of the system shown in Figure 14 with the modified French press arrangement activated.
Figure 16 is a partially schematic illustration of a system in accordance with an embodiment in which the brewed coffee is restricted from entering the brew chamber until a valve is actuated by a corresponding controller in accordance with another embodiment of the present technology.
Figure 17 illustrates a representative example of a centrifugal system designed to allow for one or more accelerated extractions in accordance with another embodiment of the present technology.
Figure 18 is a partially schematic illustration of a coffee brewing system having a removable brew chamber configured in accordance with an embodiment of the present technology.
Figure 19 is a partially schematic illustration of a coffee chamber configured to operate with a removable brew chamber in accordance with an embodiment of the present technology.
Figure 20 is a partially schematic illustration of a removable brew chamber configured in accordance with an embodiment of the present technology.
Figures 21-23 illustrate particular features of an embodiment of the brew chamber shown in Fig. 20.
Figures 24-27 illustrate a filter platform configured for use with a removable brew chamber in accordance with an embodiment of the present technology.
Figures 28A-28D illustrate channel patterns in the base of a brew chamber, configured in accordance with embodiments of the present technology.
Figures 29A-29C illustrate brew chambers having releasable connections configured in accordance with still further embodiments of the present technology.
Figure 30 is a partially schematic illustration of a system for making coffee, configured in accordance with yet a further embodiment of the present technology.

### DETAILED DESCRIPTION

### 1.0 Overview

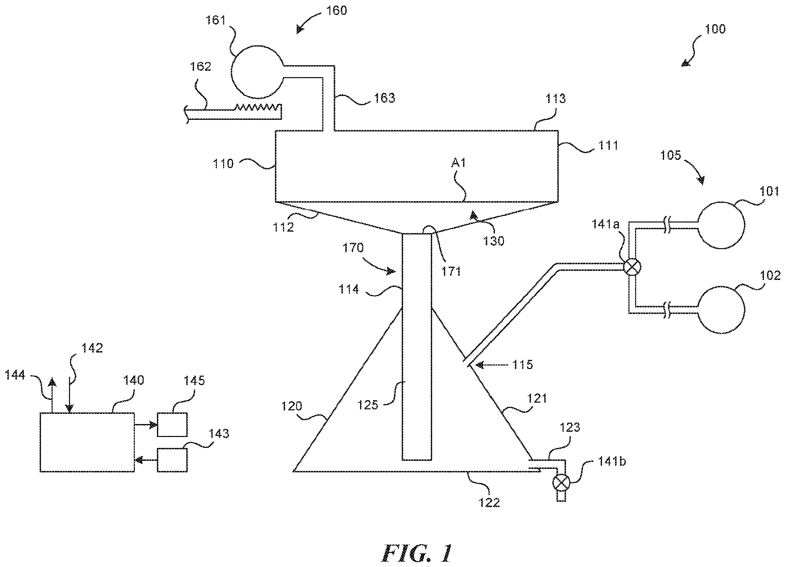

The present technology is directed generally to coffee makers configured to brew coffee via multiple coffee extractions, and/or accelerated extractions, and associated systems and methods. Such coffee makers can be suitable for residential and/or commercial purposes depending on the particular embodiment. Specific details of several embodiments of the disclosed technology are described below with reference to particular, representative configurations. In other embodiments, the disclosed technology can be practiced in accordance with coffee makers having other configurations. Specific details describing structures or processes that are well-known and often associated with coffee makers, but that may unnecessarily obscure some significant aspects of the presently disclosed technology, are not set forth in the following description for purposes of clarity. Moreover, although the following disclosure sets forth several embodiments of different aspects of the disclosed technology, several other embodiments of the technology can have configurations and/or components different than those described in this section. As such, the present technology may have other embodiments with additional elements, and/or without several of the elements described below with reference to Figures 1-30.

Aspects of the present technology are generally directed to: (a) multiple coffee extractions; (b) accelerated extractions; (c) removable brew chambers; and (d) controllers and methods associated with the foregoing techniques and devices. Each of the foregoing aspects can include several embodiments, which can be combined with embodiments of the remaining aspects in any of a variety of suitable manners. For example, a multiple extraction process generally includes using the same set of coffee grounds to brew multiple quantities of coffee during a corresponding multiplicity of brew cycles. During the brew cycle, a solvent (typically hot water, but cold water can be used for cold brewed coffee) is in liquid communication with the coffee grounds. Typically, fresh water is used for each cycle, but in some embodiments, the process can include re-using brewed coffee from a prior cycle. Typically, one extraction (of the multiple extractions) is completed before the next brew cycle is started. However, in some embodiments, the extraction process for one cycle can overlap with the brewing process for the next.

Accelerated extractions can, in several embodiments, be used for one or more of the multiple extractions described above. An accelerated extraction generally refers to an extraction force that is applied to a quantity of brewed coffee at a particular point in time that was not applied just prior to that point in time, in order to extract the brewed coffee from the grinds. Representative techniques include applying pressure (e.g., pneumatic pressure, hydraulic pressure, or mechanical pressure, for example, with a French press) applying a vacuum, using a siphon process, using centrifugal force and/or opening a previously-closed valve to allow brewed coffee to descend under the force of gravity. In at least some embodiments, combinations of the foregoing techniques are used to extract or separate the brewed coffee from the coffee grinds used to form the brewed coffee.

The foregoing processes can be controlled to accurately produce and repeat the timing sequences associated with the processes. The processes can be controlled mechanically, for example, with a mechanical clock mechanism that mechanically or electromechanically operates valves, servos, and/or other actuatable elements. In another embodiment, a digital controller (e.g., a computer or computerbased system) directs the processes used to conduct the coffee brewing and extraction methods. For example, the computer or controller can include computerbased, e.g., programmable, instructions that are coupled to electromechanical valves, servos, and/or other actuators. In particular embodiments, the multiple extractions conducted without the aid of an accelerated extraction device are complete, meaning that the results of one brew cycle are completely extracted (or nearly completely extracted) from the bed of grinds before the next brew cycle begins. In another representative embodiment, in which an accelerated extraction device is implemented, one extraction process may be only partially completed before the next brew cycle begins on the same bed of grinds.

As noted above, several embodiments of the disclosed technology may take the form of computer-executable instructions, including routines executed by a programmable computer or controller. Those skilled in the relevant art will appreciate that the technology can be practiced on computer or controller systems other than those shown and described below. The technology can be embodied in a specialpurpose computer, controller, or data processor that is specifically programmed, configured or constructed to perform one or more of the computer-executable instructions described below. Accordingly, the terms "computer" and "controller" as generally used herein refer to a suitable data processor and can include internet appliances and hand-held devices, including palm-top computers, wearable computers, cellular or mobile phones, multi-processor systems, processor-based or programmable consumer electronics, network computers, mini computers and the like. Information handled by these computers can be presented at any suitable display medium, including a liquid crystal display (LCD).

The present technology can also be practiced in distributed environments, where tasks or modules are performed by remote processing devices that are linked through a communications network. In a distributed computing environment, program modules or subroutines may be located in local and remote memory storage devices. Aspects of the technology described below may be stored or distributed on computerreadable media, including, magnetic or optically readable or removable computer discs, as well as distributed electronically over networks. Data structures and transmissions of data particular to aspects of the technology are also encompassed within the scope of the present technology.

### 2.0 Representative Embodiments

Figure 1 is a partially schematic, side elevation view of a coffee making system 100 configured to produce coffee via multiple extractions from the same volume or mass of ground coffee. The system 100 can also produce the coffee via relatively high pressure differentials during a coffee extraction process, in addition to or in lieu of producing the coffee via multiple extractions. Accordingly, as will be described in greater detail below, the system 100 can produce flavorful coffee with less ground coffee than is used by conventional techniques and brew systems, and with little or no bitter taste.

As shown in Figure 1, the system 100 can include a brew chamber 110 for brewing coffee, and an extraction or coffee chamber 120 in which the extracted coffee is collected. Ground coffee beans are placed in the brew chamber 110, as is hot water provided by a boiler 160. During the brewing process, the hot water and coffee grinds may (optionally) be agitated via an agitation device 170 before the coffee is extracted through a filter device 130 into the coffee chamber 120. The agitation device 170 can include an aperture 171 through which a pressurized gas (e.g., air) is directed so as to stir or mix the coffee grinds in the brew chamber 110. The same coffee grinds can be used to brew multiple volumes of extracted coffee, which are collected together in the coffee chamber and dispensed via a coffee outlet 123.

In a particular embodiment, the brew chamber 110 can include one or more side walls 111 (e.g. a continuous circular cylindrical or conical side wall 111), and a lower surface 112 (e.g. a sloped or canted lower surface 112), and can house the filter device 130. The boiler 160 can include (or can be coupled to) a water source 161, and can further include a heat source 162 (for heating the water provided by the water source 161), and a water inlet conduit 163 that directs the heated water into the brew chamber 110. Brewed coffee follows a fluid flow path that passes through the filter device 130, through a chamber connector 114 (that connects the brew chamber 110 to the coffee chamber 120) and into the coffee chamber 120 via an optional flow tube 125. Accordingly, the fluid flow path joins and includes the brew chamber 110 and the coffee chamber 120.

In a particular embodiment, the filter device 130 encloses an extraction area A1. For example, depending upon the volume of water that the brew chamber 110 is configured to handle, the extraction area A1 can be about 113 in.² (corresponding to a round filter device 130 having a diameter of 12 inches). In other embodiments, the extraction area A1 can be about 20 in.² or 38 in.² (corresponding to filter devices 130 having diameters of about 5 inches, or 7 inches, respectively). In any of these embodiments, the relatively large area A1 allows a given volume of coffee grinds to be spread in a relatively thin layer over the filter device 130. This in turn can increase the speed with which brewed coffee is extracted through the filter device 130, and/or can reduce the likelihood that extended contact between the brewed coffee and the coffee grinds will produce a bitter-tasting coffee.

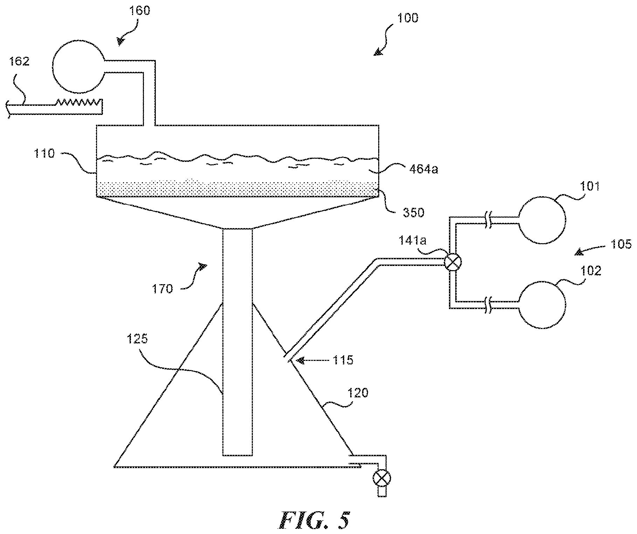

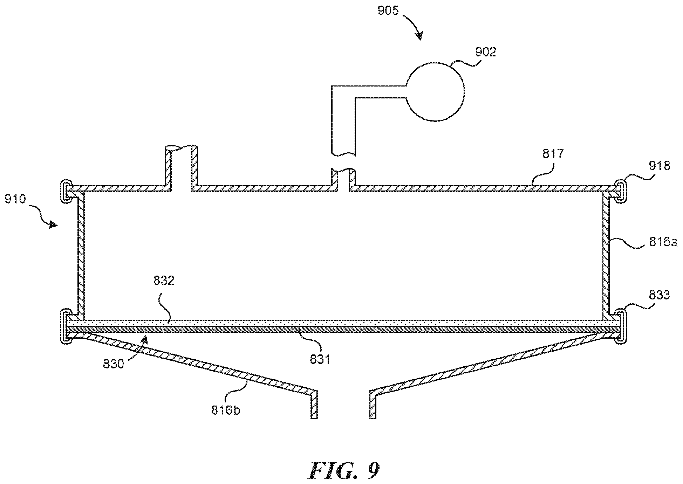

The system 100 can include a gas port 115 in fluid communication with the coffee chamber 120. In a particular aspect of this embodiment, the gas port 115 can selectively be coupled to an accelerated extraction device, for example, a pressure differential device 105 that produces a pressure differential between the brew chamber 110 and the coffee chamber 120. The pressure differential device 105 can include a vacuum source 101 and/or a pressure source 102 coupled to a first valve 141a. The vacuum source 101 is configured to draw a significant negative pressure on the coffee chamber 120, causing the brewed coffee to rapidly pass from the brew chamber 110 through the filter device 130 and into the coffee chamber 120. Accordingly, the vacuum source 101 is a representative example of a pressure differential device 105 that produces a relatively high pressure differential (e.g., at least 8.0 kPa (60 torr) in some embodiments, and at least 20.0 kPa (150 torr) in further particular embodiments) between the brew chamber 110 and the coffee chamber 120. In another embodiment, described later with reference to Figure 9, the pressure differential device 105 includes a pressure source coupled to the brew chamber 110 to force the brewed coffee from the brew chamber 110 into the coffee chamber 120. In either embodiment, the significant pressure differential provided by vacuum and/or by pressure can allow the operator to use finely ground coffee (e.g., having a diameter of from about 200µ to about 600µ and in a particular embodiment, about 200µ) that would otherwise clog typical existing commercially available batch brewers, such as high volume drip coffee brewers. Furthermore, in either embodiment, the gas port 115 can be selectively coupled to a pressure source 102 for purposes in addition to or in lieu of extracting the brewed coffee. For example, the pressure source 102 can agitate the coffee and water in the brew chamber 110 during the brewing process. Accordingly, the pressure source 102 can form a portion of the agitation device 170, described further below with reference to Figure 5.

In a particular embodiment, the coffee chamber 120 can be positioned below the brew chamber 110, as shown in Figure 1. In other embodiments, the brew chamber 110 and the coffee chamber 120 can have other positions relative to each other, particularly when, as discussed above, pressure or vacuum (rather than gravity) provides the primary force that directs the brewed coffee through the filter device 130 from the brew chamber 110 to the coffee chamber 120.

The coffee chamber 120 can have one or more side walls 121 (e.g. a conical side wall 121) and a base 122. In a particular embodiment, the system 100 is supported on the base 122 and in other embodiments, the system 100 can include other supports. For example, the system 100 can include an outer shell (e.g., a metal case or a plastic case) to provide support for the system 100. The outer shell can also serve a cosmetic purpose, e.g., by improving the outward appearance of the system 100. In at least some of these embodiments, the coffee chamber 120 includes the coffee outlet 123 and can further include a second valve 141b through which the brewed coffee is directed out of the system 100 after the brewing and extraction processes have been completed. In other embodiments, the coffee chamber 120 can serve as a carafe. Accordingly, the coffee chamber 120 need not include an outlet 123. Instead, the coffee chamber/carafe 120 can be removed from the system 100 (e.g., by separating it from the brew chamber 110) and the coffee can be poured out from the top of the coffee chamber/carafe 120.

In one embodiment, the processes for making coffee using the system 100 can be completed manually, e.g., via mechanical devices. In another embodiment, the system 100 can include a controller 140 for automatically controlling some or all of the processes used to make the coffee. The controller can include hard-wired circuits, and/or can be programmable. For example, the controller 140 can include a processor, memory and suitable input/output facilities. Accordingly, the controller 140 can receive sensor signals 142 (e.g. corresponding to system temperatures, pressures, flow rates and/or other suitable parameters) and can receive user inputs via a user input device 143 (e.g., buttons, a keyboard, touch screen, and/or other suitable device). Based on the received inputs, the system 100 can provide user outputs to a user output device 145 (e.g. a display panel) and it can provide system commands 144. The system commands 144 can automatically direct (e.g., activate, deactivate and/or modulate) the system components, e.g., the valves 141a, 141b, the boiler 160, the vacuum source 101 and/or the pressure source 102. The automated or partly automated processes available via the controller 140 can reduce the operator's workload and/or can improve the precision and/or consistency of the brewing and/or extraction processes.

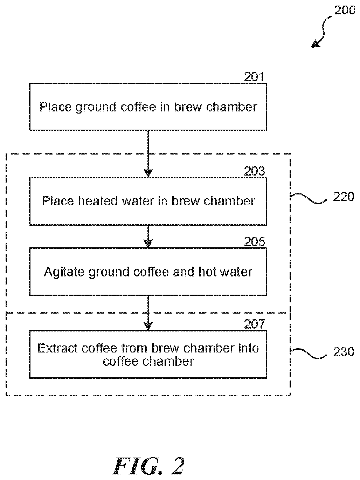

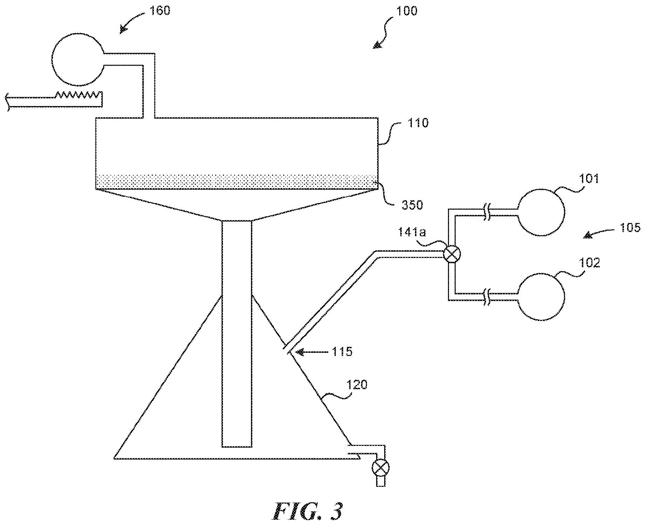

Figure 2 is a flow diagram illustrating a process 200 for brewing coffee in accordance with a particular aspect of the disclosed technology. Individual steps in the process are then described further below with reference to Figures 3-7. The overall process 200 can include a first phase 220 that in turn includes brewing the coffee, and a second phase 230 that includes extracting brewed coffee from a brew chamber to a coffee chamber. In particular embodiments, each phase is undergone once, and in other embodiments, the first and second phases are repeated once, twice, or more times to produce a single batch of coffee.

Prior to the first phase, process portion 201 includes placing ground coffee in a brew chamber. In addition to standard grind sizes used by existing commercially available batch brewers, the coffee can be finely ground, for example, to a median diameter of from about 200µ to about 600µ, or about 320µ to about 400µ, about 335µ, or about 200µ. These diameters are significantly smaller than the 800µ diameter used in standard drip processes. The coffee can be spread thinly in the brew chamber, e.g. to a depth of less than 0.7 inches, or from about 0.2 inches to about 0.6 inches, or about 0.3 inches to about 0.5 inches, or about 0.4 inches, as measured after brewing. In general, spreading the coffee so as to have a post-brew depth of less than one inch can reduce the likelihood for the resulting coffee to have a bitter taste. On the other hand, spreading the coffee to have a post-brew depth of less than 0.1 inches can produce a brew chamber width or diameter that occupies too much space in a typical commercial setting.

During the first phase (process portion 203), a volume of heated water is placed in the brew chamber. The water can be heated using a boiler or other suitable device and can enter the chamber from any suitable port or opening. In any of these embodiments, the volume of heated water is placed in intimate thermal and physical contact with the coffee grinds in the brew chamber. Optionally, process portion 205 can include agitating the coffee grinds and the hot water, for example, using a mechanical device and/or an aeration process.

The second phase 230 can include process portion 207, in which a volume of brewed coffee is extracted from the brew chamber into the coffee chamber. In a particular embodiment, a vacuum is applied to the coffee chamber to draw the brewed coffee into the coffee chamber, and in another embodiment, pressure is applied to the brew chamber to drive the brewed coffee into the coffee chamber. In yet another embodiment, pressure is applied to the brew chamber, in combination with vacuum applied to the coffee chamber. In any of these embodiments, the extraction process can be completed after the water in the brew chamber has completed the brew cycle (e.g., to extract flavor from the ground coffee), and can be completed in a short period of time (e.g., to prevent the brewed coffee from being in contact with the coffee grinds for too long, which can cause the coffee to taste bitter). Accordingly, the pressure differential between the brew chamber and the coffee chamber can be less than 8.0 kPa (60 torr) or 20.0 kPa (150 torr) (e.g., zero) during the first phase 220, and greater than 8.0 kPa (60 torr) or 20.0 kPa (150) torr during the second phase 230. For example, the brew chamber can be at atmospheric pressure during the first phase 220. During the first phase 220, a small amount of brewed coffee can pass from the brew chamber to the coffee chamber under the force of gravity, but the pressure differential between the chambers will be less than 8.0 kPa (60 torr). The fineness of the grind used in the process (which can enhance the coffee flavor strength) can also reduce the amount of brewed coffee that may leak from the brew chamber 110 to the coffee chamber 120 during the brew cycle. This in turn improves the controllability and reproducibility of the brew process because all or virtually all of the coffee will spend approximately the same amount of time in the brew chamber. In general, the threshold pressure differential of 20.0 kPa (150 torr) can be advantageous over the threshold value of 8.0 kPa (60 torr) because the higher pressure differential value produces a faster extraction process.

In at least some embodiments, the process ends at process portion 207. Accordingly, the grounds placed in the brew chamber in process portion 201 are used once with a single volume of water to produce a corresponding single volume of coffee. In other embodiments, the same grinds can be used for multiple volumes of coffee. Accordingly, process portion 203, 205 (optionally) and 207 can be repeated in series, once, twice, three times or more to produce a combined volume of coffee in the coffee chamber, with the combined volume being formed from individual volumes of coffee, each of which has been brewed with the same set of grinds.

In addition to quickly extracting the brewed coffee from the brew chamber into the coffee chamber, the high pressure differential provided by the pressure differential device can dry the grinds in the brew chamber. As a result, the dry grinds can provide a better starting point for the second (and any further subsequent) brew processes. Therefore, the likelihood for the subsequent processes to produce a bitter-tasting coffee can be further reduced. In addition, the strong pressure differential can remove the majority of dissolved gasses from the coffee grinds, which may be trapped in the coffee beans used to produce the grind during the roasting process. As a result, in subsequent extractions following the first extraction, the grinds can have a significantly larger exposed surface area, and the water used during the subsequent extractions can contact the additional surface area, which is no longer blocked by gas.

Figures 3-7 illustrate several phases of the foregoing process. Figure 3 illustrates the system 100 after an amount of coffee grinds 350 has been added to the brew chamber 110. As discussed above, the coffee grinds 350 can be spread in a relatively thin layer over the large surface area provided by the filter device 130.

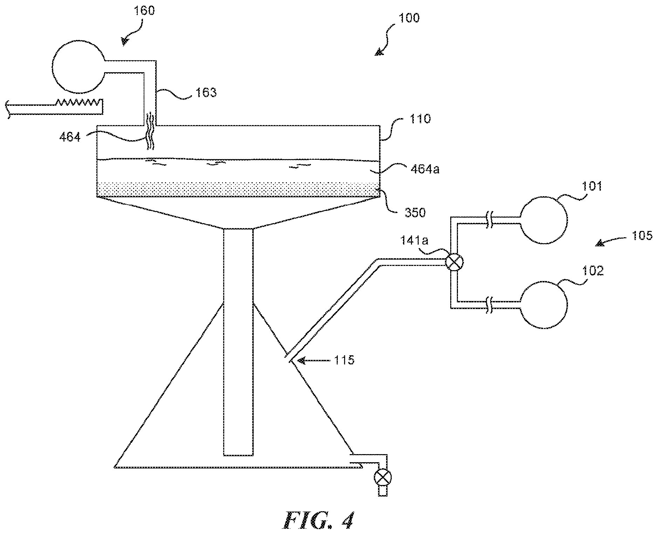

In Figure 4, hot water 464 is introduced into the brew chamber 110 so as to be in intimate physical and thermal contact with the coffee grinds 350. The hot water is introduced from the boiler 160, and is directed into the brew chamber 110 until a first volume 464a of hot water is positioned in the brew chamber 110. The first volume 464a remains in the brew chamber and in contact with the ground coffee 350 until the brewing process with the first volume 464a has been completed.

As shown in Figure 5, an optional part of the brewing process can include agitating the coffee grinds 350 and the first volume 464a of hot water, e.g., via the agitator 170. In a particular aspect of this embodiment, the pressure source 102 is activated and the first valve 141a is configured to allow pressurized air (or another gas) from the pressure source 102 into the brew chamber 110. Accordingly, the agitator 170 can include an aerator. The pressurized air agitates both the coffee grinds 350 and the first volume 464a of hot water. The pressure provided by the pressure source 102 is controlled or modulated to provide adequate agitation without unnecessarily splashing or scattering or over-agitating the coffee grinds 350, the brewed coffee, and/or the first volume of water 464a. Over-agitation can lead to overextraction during any given extraction process, which can produce bitter-tasting coffee. If the system 100 includes the flow tube 125, the pressure source 102 can direct coffee that may already be present in the coffee chamber 120 back into the brew chamber 110, e.g., to supplement the agitation action provided by the air or other gas, and/or to re-introduce already-brewed coffee into the brew chamber. The process of re-introducing already-brewed coffee can be used to modify the level of extracted solids present in the solvent during extraction, offering an additional level of control over the extraction process. The flow tube 125 can also reduce the likelihood for coffee to be aspirated into the vacuum source 101 during the coffee extraction process, which is described in further detail below.

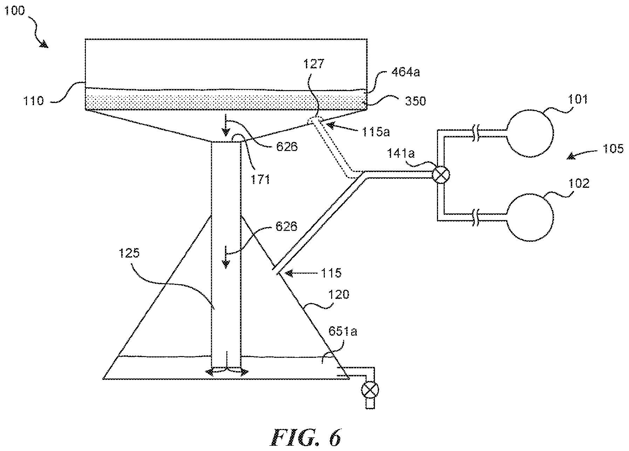

Once the brewing process (e.g., the initial brewing process) has been completed (which can take from about 5 seconds to about 5 minutes), the brewed coffee is removed from the brew chamber 110 and directed into the coffee chamber 120. For example, as shown in Figure 6, the brewed coffee follows a flow path 626 from the brew chamber 110 to the coffee chamber 120 and collects in the coffee chamber 120, forming a first volume 651a of extracted coffee. In order to force the extracted coffee at a high volumetric flow rate from the brew chamber 110 to the coffee chamber 120, the vacuum source 101 is activated and the first valve 141a is adjusted to connect the vacuum source 101 with the coffee chamber 120. The vacuum source 101 can create a negative pressure in the coffee chamber 120, e.g., an absolute pressure of from about 0.000000133 Pa (.000000001 (or 10⁻⁹) torr) to about 93.3 kPa (700 torr), or about 20.0 kPa (150 torr) to about 88.0 kPa (660 torr), or about 23.3 kPa (175 torr) to about 53.3 kPa (400 torr, or about 23.3 kPa (175 torr). When the brew chamber 110 is at atmospheric pressure, the foregoing absolute pressures correspond to pressure differentials (between the brew chamber 110 and the coffee chamber 120) of from about 8.0 kPa (60 torr) to about 101.325 kPa (759.999999999 torr), or about 13.3 kPa (100 torr) to about 81.3 kPa (610 torr), or about 48.0 kPa (360 torr) to about 78.0 kPa (585 torr, or about 78.0 kPa (585 torr). Accordingly, the pressure differential is at least 8.0 kPa (60 torr). In other embodiments, the pressure differential can have other threshold values. For example, in certain embodiments, the pressure differential for a single-extraction device is at least 20.0 kPa (150 torr) or about 48.0 kPa (360 torr) to about 78.0 kPa (585 torr, or about 78.0 kPa (585 torr). The pressure differential device 105 can have a flow capacity suitable for any of the pressure differentials described above, for example, a flow rate of at least one cubic foot per minute (CFM), e.g., for a period of at least 5 seconds.

The pressure differential draws the extracted coffee from the brew chamber 110 to the coffee chamber 120. Because the gas port 115 is located above the first volume 651a of extracted coffee, the extracted coffee that collects in the coffee chamber 120 is not sucked through the gas port 115 by the vacuum source 101. Representative extraction times of each extraction process can range from about 5 seconds to about 60 seconds, depending on factors that include the pressure differential level, the volume of coffee removed from the brew chamber 110 with each extraction, and the fineness of the coffee grind.

In another embodiment, also illustrated in Figure 6, the gas port can have other locations. For example, a gas port 115a can be located beneath the filter device 130, but above the coffee chamber 120, provided the gas port 115 includes an arrangement for preventing the extracted coffee from being aspirated into the vacuum source 101. Accordingly, the system 100 can include a shield 127 that prevents aspiration, while allowing the extracted coffee to proceed into the coffee chamber 120 under the force of gravity, after it has been extracted through the filter device 130.

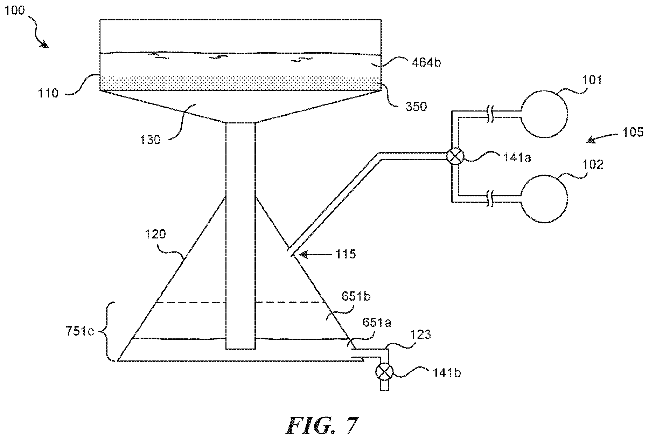

As shown in Figure 7, a second volume of hot water 464b has been placed in the brew chamber 110 and the process described above with reference to Figures 5 and 6 is repeated. The result is that a second extracted coffee volume 651b is directed through the filter device 130 and into the coffee chamber 120 to mix with the first extracted coffee volume 651a. The combined extracted coffee volume 751c is then withdrawn from the system via the coffee outlet 123 and the second valve 141b.

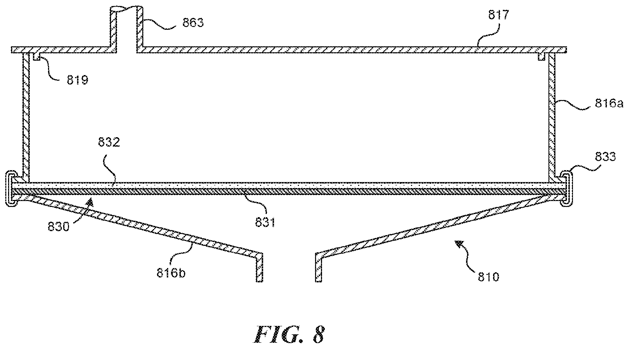

With reference now to Figure 8, a representative brew chamber 810 can include a filter device 830 having multiple components. In a particular embodiment of the present technology, for example, the filter device can include a re-usable, perforated filter support 831 that carries a disposable filter element 832. In a further aspect of this embodiment, the filter device 830 can be fixedly but releasably positioned in the brew chamber 810, and can include a non-disposable filter. For example, the brew chamber 810 can include an upper portion 816a that is removeably coupled to a corresponding lower portion 816b. The filter device 830 can be positioned between the upper and lower portions, and can be held in place with a filter clamp 833 that also releasably couples the upper and lower portions 816a, 816b together. The filter support 831, the filter element 832, and the filter clamp 833 are configured to withstand a positive or negative pressure applied to the system during the coffee extraction process. The filter element 832 can be formed from any of a number of suitable media, including paper, cloth and/or perforated metal. In a representative embodiment, the filter element 832 is formed from paper, with a pore size of about 5 microns.

The brew chamber 810 can further include a lid 817 having one or more retention elements 819 that keep it centered on the upper portion 816a. A corresponding water inlet conduit 863 can be built into the lid 817. In one embodiment, the lid 817 can be held in place with a clamp (similar to the clamp described below with reference to Figure 9). In other embodiments, the force of the vacuum applied to the brew chamber 810 keeps the lid in place during the extraction process.

Figure 9 illustrates a brew chamber 910 configured in accordance with still another embodiment of the present technology. In one aspect of this embodiment, the upper portion 816a of the brew chamber 910 is pressurized, in contrast with the arrangement described above in which the lower portion 816b of the brew chamber 910 is subjected to a vacuum. Because the upper portion 816a is pressurized, the upper portion 816a is coupled to a pressure differential device 905 that includes a pressure source 902. A chamber lid 817 is releasably connected to the upper portion 816a with a removable lid clamp 918. In particular embodiments, the system includes a pressure release mechanism that releases the pressure in the brew chamber 910 during the brewing process. Accordingly, the elevated pressure in the brew chamber 910 can be provided only during the process of directing post-brew coffee from the brew chamber 910 into an associated coffee chamber. The brew chamber 910 is accordingly sealed during the foregoing extraction process to prevent a pressure leak from the brew chamber 910 that would reduce the efficiency with which the applied pressure extracts the brewed coffee from the brew chamber 910. In a representative process, the upper portion 816a is pressurized to a value up to about two atmospheres (e.g., about 30 psi absolute pressure or 15 psi gage pressure) and in other embodiments, the upper portion 816a is pressurized to a value up to about ten atmospheres. In any of these embodiments, the pressure source 902 can provide enough pressure to produce a pressure differential of at least 8.0 kPa (60 torr) between the upper portion 816a and the lower portion 816b (or the associated coffee chamber).

Table 1 below illustrates representative results obtained using an apparatus generally similar to that described above with reference to Figures 1 and 8. In this embodiment, a total of three extraction processes were performed to produce approximately one liter of brewed coffee. The process was conducted at two different vacuum levels: a first or high vacuum of 23.5 kPa (176 torr) (absolute pressure), and a second or medium vacuum of 87.9 kPa (659 torr (absolute pressure). At each vacuum level, coffee was produced using three different grind sizes. Grind A corresponds to a fine grind (finer than the standard drip grind of 800µ), grind B corresponds to an espresso grind (which is finer than grind A) medium grind, and grind C corresponds to an espresso fine grind, e.g., a grind finer than typical espresso grind. The foregoing extraction processes were conducted with a system having a 5-inch diameter brew chamber.

**Table 1**

| | Grind "A" | Grind "B" | Grind "C" |
|---|---|---|---|
| High Vacuum (Vac Attained: 23.5 kPa 176 torr) | First Pull: 15 sec | First Pull: 10 sec | First Pull: 30 sec |
| | Second Pull: 30 sec | Second Pull: 32 sec | Second Pull: 40 sec |
| | Third Pull: 20 sec | Third Pull: 42 sec | Third Pull: 60 sec |
| Med Vacuum (Vac Attained : 87.9 kPa 659 torr) | First Pull: 20 sec | First Pull: 30 sec | First Pull: 35 sec |
| | Second Pull: 30 sec | Second Pull: 45 sec | Second Pull: 55 sec |
| | Third Pull: 30 sec | Third Pull: 40 sec | Third Pull: 60 sec |

Each complete brew was performed using 43 grams of coffee and one liter of water, with a cloth filter. Each first pull or extraction used 400 mL of water, and each second and third pull or extraction was performed with 300 mL of water. The average height of the coffee grinds resting on the filter, after the brew process was complete, was approximately 0.4 inches. An additional set of results was obtained using a paper rather than a cloth filter for grind C. The results included a faster extraction process, with the second and third pulls at 20 seconds each, rather than at 40 and 60 seconds, respectively, for the high vacuum. When the medium vacuum was used, the extraction process was longer, including 40 seconds for the first pull, 70 seconds for the second, and 65 seconds for the third. The times in Table 1 are extraction times only. Corresponding brewing times were 40 seconds per cycle, prior to initiating extraction.

Table 2 below illustrates representative results obtained using another apparatus generally similar to that described above with reference to Figures 1 and 8. In this embodiment, a paper filter was used in place of a cloth filter. In addition, the system included a 7-inch brew chamber, and the pull times were reduced compared to the times shown in Table 1.

**Table 2**

| | Grind "A" | Grind "B" | Grind "C" |
|---|---|---|---|
| High Vacuum (Vac Attained: 23.5 kPa 176 torr) | First Pull: 8 sec | First Pull: 8 sec | First Pull: 9 sec |
| | Second Pull: 12 sec | Second Pull: 8 sec | Second Pull: 7 sec |
| | Third Pull: 8 see | Third Pull: 15 see | Third Pull: 18 see |
| Med Vacuum (Vac Attained : 87.9 kPa 659 torr) | First Pull: 5 sec | First Pull: 8 sec | First Pull: 12 sec |
| | Second Pull: 8 sec | Second Pull: 8 sec | Second Pull: 15 sec |
| | Third Pull: 10 sec | Third Pull: 15 sec | Third Pull: 20 sec |

Further, the average height of the coffee grinds resting on the filter, after the brew process was complete, was approximately 0.2 inches. The times in Table 2 (like those in Table 1) are extraction times only. Corresponding brewing times were 40 seconds per cycle, prior to initiating extraction.

Each of the foregoing tests produced a flavorful cup of coffee, notably lacking in bitterness. For purposes of comparison, Grind A (the coarsest grind) was also tested in a drip coffee brewer. The process took 7 minutes for 43 grams of grinds and one liter of water, and the coffee produced was markedly bitter. The height of the coffee grinds under these conditions, in a cone filter, was approximately two inches.

In at least some embodiments, it is expected that the foregoing times listed in Tables 1 and 2 can vary by ± 5 seconds. Accordingly, a pull of 30 seconds can correspond to a range of from about 25 to about 35 seconds. As used herein, the term "about" when used in the context of pull times means within 2 seconds. In general, the term "about" means within 10%, as applied to temperatures, pressures, flow rates, and dimensions.

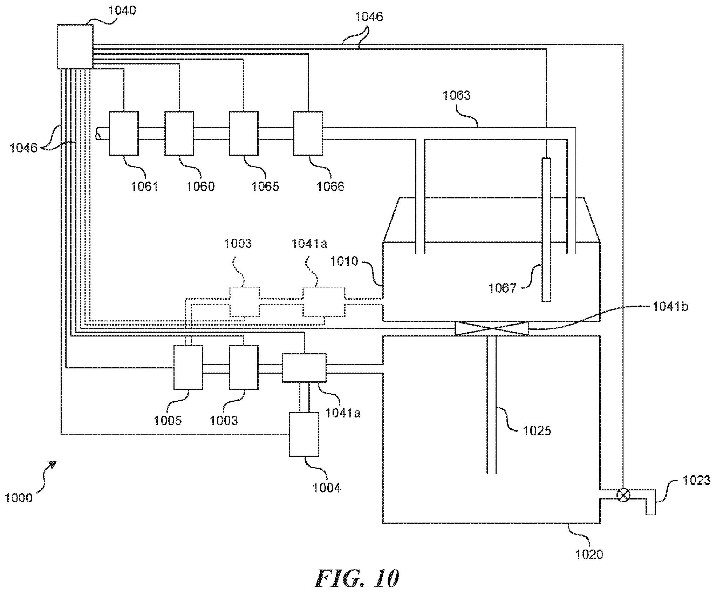

Figure 10 is a schematic illustration of a system 1000 that is automated in accordance with an embodiment of the present technology. Accordingly, the system 1000 can include a controller 1040 (e.g., a microcontroller) that communicates with several of the system components via signal lines 1046. The signal lines 1046 can be used to transmit sensed information to the microcontroller 1040 and/or provide instructions from the controller 1040 to the components of the system 1000.

The system 1000 can include a brew chamber 1010 coupled to a coffee chamber 1020 via a chamber valve 1041b. Coffee grinds are placed in the brew chamber 1010. Brewed coffee is extracted through a filter (not visible in Figure 10), through the chamber valve 1041b, through a flow tube 1025, and into the coffee chamber 1020. The resulting coffee can be removed from the coffee chamber 1020 via a coffee outlet 1023.

The brew chamber 1010 receives water from a water source 1061, which is heated in a boiler 1060, and can be pressurized for flow into the brew chamber 1010 with a water pump 1065. A flow meter 1066 can be used to measure and/or modulate the flow of water through a corresponding water inlet conduit 1063 into the brew chamber 1010. The system can include one or more temperature sensors, for example, a temperature sensor 1067 positioned to measure the temperature of the water at the brew chamber 1010.

A pressure differential device 1005 provides vacuum and/or pressure to direct extracted coffee from the brew chamber 1010 into the coffee chamber 1020. The pressure differential device 1005 can create the required pressure differential via positive and/or negative pressure. One or more optional regulators 1003 and/or pressure differential valves 1041a control the introduction of vacuum or pressure provided by the pressure differential device 1005, and control the communication between the pressure differential device 1005 and the coffee chamber 1020 and/or the brew chamber 1010. In other embodiments, the regulator(s) 1003 can be eliminated, and instead, the pressure differential device 1005 can have fixed, known vacuum/pressure parameters for controlling the pressure differential between the brew chamber 1010 and the coffee chamber 1020. In any of these embodiments, the pressure differential device 1005 can include one or more components that apply a vacuum to the coffee chamber 1020 (as shown in solid lines), and/or one or more components that apply pressure to the brew chamber 1010 (as shown in dashed lines). A secondary pump 1004 can be coupled to the coffee chamber 1020, for example, to provide the agitation force described above with reference to Figure 5. In particular embodiments, an additional regulator can be coupled to the secondary pump 1004 to control the timing and/or pressure provided during the agitation process.

A representative process for using the system 1000 described above with reference to Figure 10 is described below.
Step 1: Program the controller 1040 to set brew parameters (e.g. temperature, water volume per brew/extraction cycle, vacuum/pressure strength and/or start and end times, agitation start and/or end times, and/or agitation strength). An operable combination of parameters is referred to as a "program".
Step 2: Securely fasten a clean filter into the brew chamber 1010. Depending on the embodiment, this may include placing the filter in the brew chamber 1010, and securely clamping the filter in place to prevent grinds from passing through or around the corners of the filter during brewing, and to prevent the filter from overly warping if the coffee is agitated during the brew cycle. In representative embodiments, the force provided by the process of clamping the filter in place is higher than is used in conventional processes so as to withstand the higher pressure differential supplied by the pressure differential device 1005.
Step 3: Place a selected weight of ground coffee into the brew chamber 1010, resting the grind on top of the filter.
Step 4: Initiate the program at the controller 1040. If the controller 1040 includes a touchscreen display, initiating can include pressing a "Start" button. In other embodiments, the start button can include a physical button and/or another suitable interface.
Step 5: The controller 1040 directs water from the water source 1061 to the boiler 1060, where the water is heated to a selected temperature specified in the program (or if water is not provided through a water line, water may be manually placed into boiler, with heating commencing once the water has been placed in the boiler).
Step 6: The water reaches the temperature programmed into the controller 1040. In representative embodiments, the temperature of the water is from about 195°F to about 205°F. The temperature of the water can be controlled via a feedback device (e.g., a PID controller). In another embodiment, the water is allowed to come to a boil and then rest for pre-specified time to arrive at the programmed temperature. For example, the controller 140 can allow the water to come to a boil, rest for a pre-specified time, and then introduce the water without any specific feedback regarding the temperature of the water. For example, the water can be boiled and then rest for 30 seconds or the water can be heated instantaneously or nearly instantaneously to a programmed temperature, for example, using an induction heater. In at least some of these embodiments, the controller 1040 can direct the boiler 1060 to release a specified volume of heated water, e.g., via a valve. The amount of water can be set by the program. The released water passes into the brew chamber 1010 so as to be in contact with the coffee grinds. The total volume of water released into the brew chamber 1010 may be regulated by the flow meter 1066 placed between the boiler 1060 and the brew chamber 1010, or the valve can be time-actuated. Without a flow meter present, opening the water valve for a period of time specified in the program means that different water line pressures will lead to different volumes of water being dispensed. Accordingly, the flow meter 1066 can produce a relatively consistent dispensed water volume, despite different water line pressures present in different environments. In a further particular aspect of the foregoing embodiments, coffee within the brew chamber 1010 is prevented from exiting the brew chamber 1010 while the brewing process is underway, and only exits the brew chamber 1010 after a predetermined brewing period. In other words, the coffee does not proceed directly through and out of the brew chamber 1010, as it does in a typical drip coffee maker.
Step 7: The coffee brewing in the brew chamber 1010 is (optionally) exposed to agitation, via an air pump that introduces bubbles, and/or via another agitation mechanism, such as a mechanical stirrer, for an amount of time and at an intensity provided for in the program.
Step 8: The brew chamber 1010 is exposed to, acted upon, or subjected to a vacuum and/or an elevated pressure and/or another extraction accelerating force for an amount of time and at a level provided for in the program, evacuating the brew chamber of fluid. In a particular embodiment, nearly all the brewed coffee is evacuated (using a pressure source, vacuum source or both) from the brew chamber, leaving the nearly dry grinds resting on the filter. For example, the grinds can be dried to the point at which only 5-10% of the water initially added to the grinds remains in the grinds after the extraction process. In a representative process, the system shown in Figure 10 can be used to obtain 950 mL of coffee from an initial volume of one liter of water. By contrast, one liter of water used in a drip process typically yields only 880-890 mL of brewed coffee. As discussed above, more completely drying the grinds can reduce the likelihood for any remaining water to continue extracting coffee from the coffee grinds. As a result, the process of extracting coffee can be more carefully and precisely controlled, which in turn prevents the process from inadvertently over-extracting coffee from the grinds, which can lead to bitter-tasting coffee. Instead, the drying process can more effectively stop the coffee extraction process, and allow the extraction process to restart at a controlled, selected time, for example, when a subsequent brewing process begins. In addition, increasing the amount of coffee extracted from the coffee grinds can produce more coffee per extraction process, and/or can reduce the amount of coffee grinds needed for a given extraction process or series of processes. In another embodiment, the brewed coffee is not completely evacuated, and is instead only partially evacuated, before the introduction of fresh water into the brew chamber.
Step 9: In particular embodiments, e.g., those embodiments that include multiple extractions from a single mass of coffee grinds, Steps 6-8 are repeated at least once, optionally with different parameters for time, vacuum force, water volume and/or other parameters, specified in the program for each repetition. Step 7 may or may not be used during any of the foregoing extraction processes, depending on factors that can include the type of coffee being brewed and/or the desired coffee flavor.
Step 10: Once the extraction process has been repeated a suitable number of times, as specified in the program, the brewed coffee that has been evacuated into the coffee chamber is ready for consumption. The coffee may be removed from the coffee chamber via any of a variety of suitable mechanisms, depending on the design of the coffee chamber. For example, coffee can be removed via a spout, or the coffee chamber can be a removable thermal carafe, allowing the user to remove the coffee chamber completely once brewing is complete. The carafe can be used to pour the brewed coffee into a cup.
Step 11: Once the entire brewing process is complete, the filter can be removed from the brew chamber, along with the used grounds. Depending on the filter design, the filter may either be cleaned for later use, or disposed of.
Step 12: With the filter removed, the brewing device can be cleaned. Cleaning can include manual cleaning using traditional cleaning methods, such as sponge and soap, or can include repeating Steps 4-10 above, without the introduction of coffee grounds. The introduction of heated, agitated water into the system without coffee grounds will have the effect of dissolving residual brewed coffee and eliminating grinds that were not eliminated upon the removal of the filter.

One feature of at least some of the foregoing embodiments described above is that a single quantity of brewed coffee can be made by extracting multiple volumes of heated water through the same set of coffee grinds. An advantage of this approach, when compared to conventional approaches, is that the amount of coffee grinds required to produce a cup of flavorful coffee can be reduced significantly. For example, it is expected that the foregoing technique can reduce the required amount of coffee beans by approximately 30% or more, by weight, when compared to conventional drip and/or other coffee making processes. Furthermore, the multiple extraction process allows smaller, more carefully controlled quantities of water to go through the brewing process, which further improves the uniformity of contact between any quantity of water and the coffee grinds. Performing multiple short duration extractions is also less likely to produce bitter coffee than one long-duration extraction, and adding multiple volumes of fresh solvent to the coffee is more likely to extract additional flavor compounds that would otherwise remain unextracted. This result can be based upon a number of factors. For example, bitters (e.g., primarily tannins) are typically extracted from the coffee grinds later in the extraction process. Accordingly, by adding fresh solvent (e.g., water), the brew or extraction process is restarted with each new controlled quantity of solvent added to the grinds. Accordingly, as more of the total brewing/extraction time is spent early in the brewing process for each of the multiple extractions, bitters are less likely to be extracted. By adding a new volume of water for each of the multiple extractions, a new phase partition equilibrium (solid/liquid) begins. In particular, there are no dissolved materials in the newly-added water at the beginning of each new extraction cycle. For each new cycle, the phase partitioning process begins again, with the same compounds partitioning into the new volume of water at set times. Because the bitters are released from the coffee grounds at a generally fixed point in time after the brewing process starts, the brewing process can be deliberately stopped before that point is reached. Furthermore, multiple extraction processes, each using the same set of grinds and a new volume of water, can produce more organic flavor compounds in the resulting coffee.

Another feature of at least some of the foregoing embodiments is that a relatively large pressure gradient can be formed between the brewing chamber and the coffee chamber. As discussed above, the pressure gradient can be formed by pressurizing the brewing chamber and/or applying a vacuum to the coffee chamber. A result of the large pressure gradient is that the brewed coffee is quickly extracted from the brewing chamber, therefore allowing more precise control over the amount of time that the brewed coffee is in direct contact with the coffee grinds. This in turn allows the operator to produce flavorful coffee without the coffee becoming bitter as a result of spending excessive time in contact with the coffee grinds. For example, the large pressure gradient can pull a thin layer of water quickly through the filter so that all or a significant portion of the coffee grinds are in contact with water for approximately the same amount of time. By contrast, conventional gravity extraction processes typically are not as amenable to the level of control outlined by the processes described above. It is difficult to brew coffee in conventional manners to produce larger quantities of coffee without a bitter taste. The large pressure gradient can be particularly useful for finer grinds, for which existing methods either are incapable of brewing fast enough to prevent high bitterness levels, or are incapable of producing a brew at all, for example, due to the filter clogging when used with very fine grinds.

Still another feature of at least some of the foregoing embodiments is that the brewing chamber and in particular, the filter, can have a large surface area when compared with the volume of coffee grinds that are placed on the filter and/or the volume of coffee produced. The result is that the coffee grinds can form a relatively thin layer of coffee over the filter. This in turn results in a more uniform brew. For example, each portion of hot water passing through the bed of coffee grinds passes through coffee grinds that have been exposed to approximately the same quantity of water. The coffee produced in this manner has a concentration and taste similar to that of drip coffee, without the bitterness associated with other conventional coffee brewing techniques, and is produced in a shorter period of time than typical drip techniques. This is unlike conventional arrangements in which the bed of coffee grinds is relatively deep. In such an arrangement, some water passes through only a portion of the total depth when extraction begins, and other water passes through the entire depth, a problem that is often associated with making espresso, and which is referred to as channeling. Also, for example, utilizing a relatively thin layer of coffee over the filter can improve the controllability and reproducibility of the brew process because all or virtually all of the coffee will spend approximately the same amount of time in the brew chamber. In addition, a thin layer of coffee grinds can significantly accelerate the extraction process by reducing the barrier through which coffee must travel to enter the coffee chamber upon extraction.

Still another advantage of the foregoing feature is that the large filter surface area can reduce or eliminate the likelihood for clogging during the extraction process. In particular, the relatively large filter surface area (e.g., in combination with the large pressure differential created by the pressure differential device) can allow the system to brew from finer grinds (e.g., less than approximately 400 microns) without clogging, e.g., because for a fixed weight of grinds, a larger filter surface area will result in a shallower grind bed, and hence create less fluidic resistance to water flowing through the grinds. Finer grinds can typically produce more flavor per unit of extraction time, because they have greater surface area for a given weight of grind and hence organic compounds from the grinds can be extracted more quickly into solvent (e.g. water), but can also produce bitters more quickly. Accordingly, controlling the timing of individual brew cycles can allow the system to consistently and reproducibly produce flavorful, non-bitter coffee.

Still another feature of at least some of the foregoing embodiments is that the system can include an active device that applies a vacuum or a positive pressure to the brewing chamber to direct brewed coffee into the coffee chamber. Unlike conventional siphon devices, which typically rely on a small vacuum produced by condensing and/or cooling air and/or water vapor in the coffee chamber, the foregoing arrangement produces significantly higher vacuums and/or pressures, which can expedite the process for withdrawing coffee from the brew chamber, reducing or eliminating the bitterness that can result from the brewed coffee spending too much time in contact with the coffee grounds.

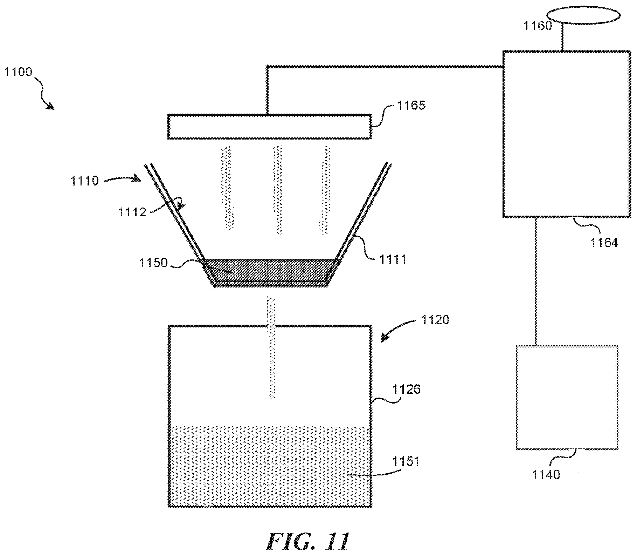

Figures 11-17 illustrate further representative embodiments of the presently disclosed technology, several of which include at least some of the foregoing features, in addition to or in lieu of further features.

A representative process includes placing coffee grinds into the brew chamber by the operator or via an automatic coffee dispensing system, and introducing water via a water introduction device, which is directed by a controller. The coffee is then brewed according to the system's applicable brew methodology (e.g. drip, siphon, etc.). The resulting brewed coffee is transferred from the brew chamber to a coffee chamber via an applicable methodology (for example, in a drip coffee setup, the coffee drips into the coffee chamber via gravity). Once the coffee has completed or approximately completed brewing and the flow of brewed coffee from the brew chamber to the coffee chamber has completely or approximately stopped as a result, the controller then causes the water introduction device to introduce a second volume of water into the brew chamber, and the applicable brewing process is re-initiated one or more times using the same set of previouslyused coffee grinds. The brewed coffee from each such extraction of the same coffee grinds is combined to form the final beverage.

The foregoing process can produce one or more significant practical results. For example, by allowing a set of coffee grinds to undergo an entire brew process (e.g., from the introduction of water and subsequent brewing to the flow of brewed coffee from the brew chamber to the coffee chamber, removing all or at least a significant amount of the solvent from the brew chamber), and then adding a fresh volume of water to the same coffee grinds, a new solid-liquid phase partition equilibrium is established by the introduction of the fresh solvent, changing the extraction and, if desired, reducing the total extraction of bitter/astringent compounds. By combining multiple brews made from the same grinds using this method, a given weight of coffee grinds is used to produce a volume of brewed coffee for which the total dissolved solids is comparable to, or greater than, coffee brewed using a substantially greater mass of coffee grinds.

In a particular method (conducted, e.g., with an embodiment of the apparatus described above with reference to Figure 10), a total of 43 grams of ground coffee can be combined with four separate 250 milliliter volumes of water to produce a brewed coffee that has a total dissolved solids of 1300 ppm, which is consistent with the usage of 55-60 grams of ground coffee combined with 1 liter of water using standard drip methodologies. Total dissolved solids (TDS) is a measure of the total content of chemical compounds extracted from the coffee grinds into the water solvent. Higher TDS measurements indicate a greater extent of extraction of chemical compounds into the water. These chemical compounds typically include both compounds that are responsible for the unique flavor of coffee as well as compounds that cause a sensation of bitterness/astringency. Although it is possible to increase the total dissolved solids of coffee brewed with 43 grams of ground coffee using standard drip methodologies to achieve a total dissolved solids typically associated with brewing 55-60 grams of ground coffee through a variety of techniques for increasing extraction, including prolonged extraction or brewing using elevated water temperature, these techniques are typically associated with a dramatic increase in bitterness. Provided that other variables in the coffee brewing process such as extraction time, grind size, temperature, and agitation level are suitably controlled, embodiments of the current method, which establish several solid-liquid phase partition equilibria, increase total dissolved solids of extracted coffee from a given set of grinds while extracting compounds that result in bitterness into the brewed coffee within commercially acceptable ranges, rather than over-extracting bitter compounds (in other words, the coffee is not too bitter to serve to a customer). This is commercially significant, because it allows coffee to be brewed using significantly less ground coffee, by weight (e.g., 20-40% less, in the example provided above, using four extractions of the 250 mL to brew one liter of coffee), while maintaining full flavor and controlling bitterness.

Figure 11 illustrates a system 1100 having a brew chamber 1110 that includes a grind basket 1111 fitted with a paper filter 1112 that holds coffee grinds 1150. Water is provided by a water pump 1164 which transfers water from a boiler 1160 to a spray head 1165. The spray head 1165 distributes the water over the coffee grinds 1150. A corresponding coffee chamber 1120 includes a carafe 1126 or other holding vessel that receives and contains brewed coffee 1151. The system can include a controller 1140 that directs the pump 1164 to drive a volume of water from the boiler 1160 to the spray head 1165, then to the grind basket 1111. The controller 1140 can then wait a pre-programmed, pre-calculated period of time (based, e.g., on the weight of the grinds), after which the water has substantially completed brewing by dripping through the grind basket 1111 and into the carafe 1126. The controller 1140 can then direct the introduction of a new volume of water into the grind basket 1111 using the previously brewed, non-replaced coffee grinds 1150 and repeat the above steps one or more times. This procedure allows the extraction process to repeat with a fresh volume of solvent. The multiple volumes of brewed coffee are subsequently combined in the carafe 1126, which can then be emptied by the operator, with the brewed coffee ready for consumption.

The foregoing design is distinguished from a conventional pulse brewing drip system or a pre-infusion system, which are other methods that can be used to increase the total dissolved solids of brewed coffee. For example, in the foregoing embodiment, the controller is programmed to specifically wait until the water has substantially completed brewing, whereas in a pulse brewing drip system, water is gradually introduced into the brew chamber in repeated cycles as the coffee is still brewing, and whereas in a drip or espresso pre-infusion system, a volume of water is added to the ground coffee to saturate the grinds with water prior to introducing the majority of the water into the brewing process. The intended effect is also different. Pulse brewing and pre-infusion are designed to saturate the grinds with water, so that they can absorb additional water more readily, and/or to increase the amount of contact time between the water and ground coffee, whereas the embodiment described above is expected to eliminate as much brewed coffee as possible from the coffee grinds by substantially completing the brew process before re-introducing water into the grinds. In other words, pre-infusion and pulse brewing methodologies introduce additional water during the brew process to ensure the grinds are constantly saturated with water, whereas the embodiment described above introduces water into the coffee grounds only once such grounds have substantially completed brewing, hence waiting until the moisture content of such grinds are substantially at their minimum during the brew cycle prior to re-introduction of water.

In order to facilitate brew times that are amenable to multiple extractions in the foregoing embodiment without resulting in excess bitterness, an operator can use 20-40% less coffee grounds, by weight, than amounts that would typically be utilized in a commercial setting to brew coffee via a grind basket of a given diameter. By using fewer grinds, water dispensed into a grind basket will substantially complete brewing faster, because the smaller amount of grinds present a lesser barrier for water to drip through, thus reducing the bitterness of each brewed volume of coffee. Although reduced brew times would otherwise translate into a weaker beverage, the foregoing design uses repeated extractions of the same coffee grounds, each at a reduced brew time, to increase flavor extraction.

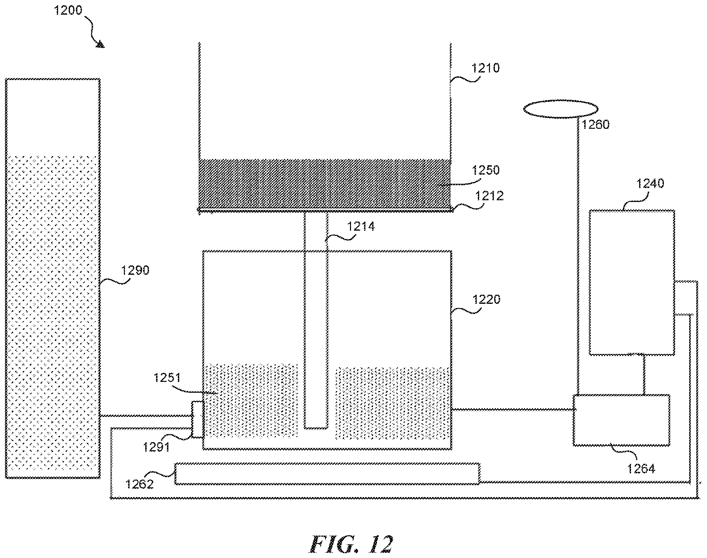

Figure 12 illustrates a representative example of a siphon coffee system 1200 that includes a brew chamber 1210 forming an upper or top chamber of the system. Coffee grinds 1250 are placed atop a filter 1212 between the brew chamber 1210 and an intermediate brewed coffee storage chamber 1220, which forms a lower or bottom chamber. A corresponding controller 1240 is programmed with instructions that can:
(a) cause a water pump 1264, operating as a water introduction device, to direct a volume of water from a boiler 1260 into the lower chamber 1220,
(b) then direct the activation of a heating element 1262 acting upon the lower chamber 1220, causing the water to travel up through a brew tube 1214 into the upper chamber 1210 as a result of water vapor pressure buildup in the lower chamber 1220 caused by the heating of the water therein,
(c) then wait a pre-specified time, allowing the coffee to brew sufficiently in the upper chamber 1210,
(d) then direct the heating element 1262 to cool (e.g., by shutting off the heating element), causing the water vapor in the lower chamber 1220 to condense, forming a vacuum that causes the brewed coffee to descend from the upper chamber 1210 to the lower chamber 1220, via the brew tube 1214,
(e) then cause the descended brewed coffee 1251 to be released from the lower chamber 1220 to the coffee chamber 1290, by actuating a valve 1291 that creates a flow path and moves the brewed coffee from the lower chamber 1220 to the coffee chamber 1290,
(f) then introduce a second volume of water into the lower chamber 1220, and
(g) repeat steps (b)-(e) one or more times, hence allowing the brewing and extraction processes to repeat with a fresh volume of solvent.

Subsequently, the multiple volumes of brewed coffee are combined in the coffee chamber 1290, which can then be emptied by the operator, with the brewed coffee ready for consumption. In some embodiments, instead of adding fresh solvent to the grinds, the same volume of solvent is used when repeating steps (b)-(e).

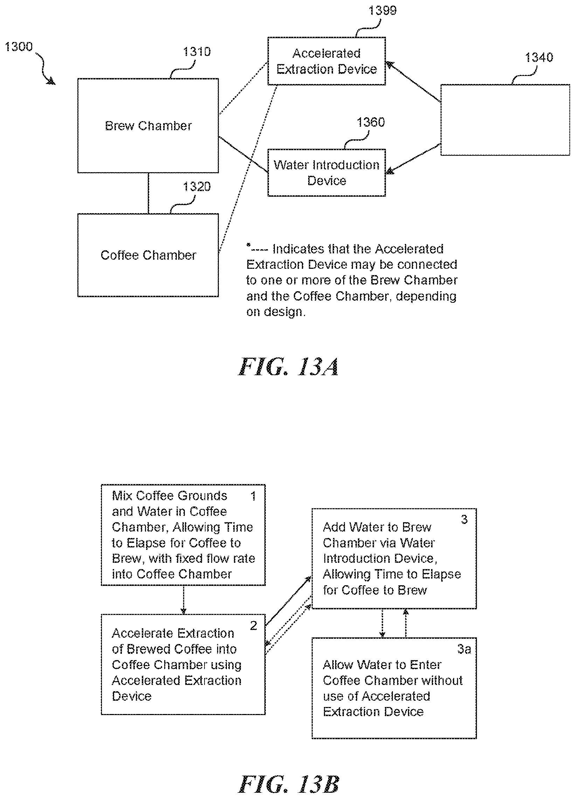

Figures 11 and 12, discussed above, illustrate multiple extraction coffee brewers that need not include an extraction acceleration device. Figures 1-10, also discussed above, and Figures 13A-17, discussed below, illustrate representative accelerated extraction devices, that can be used with one or more of the multiple extraction processes previously and/or described below. For example, a representative system 1300 shown in Figure 13A includes (a) a brew chamber 1310, (b) a coffee chamber 1320 (e.g., having a capacity of 200mL or more), (c) an accelerated extraction device 1399, (d) a water introduction device 1360, and (e) a controller 1340 that is configured to produce more than one extraction of a given set of coffee grinds using the accelerated extraction device for at least one extraction.

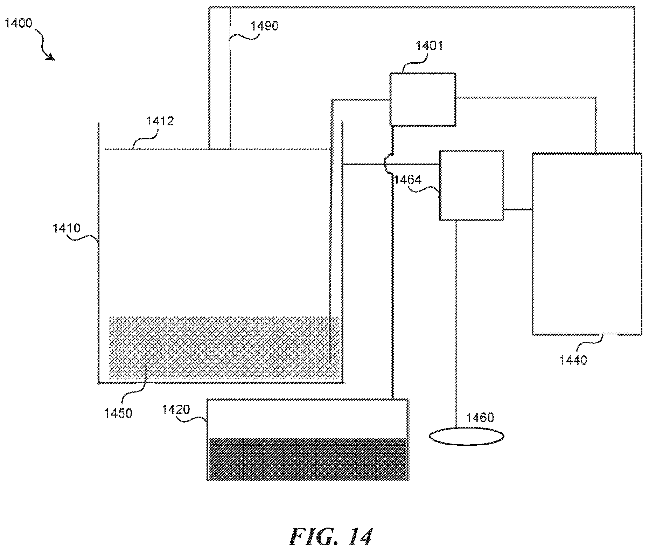

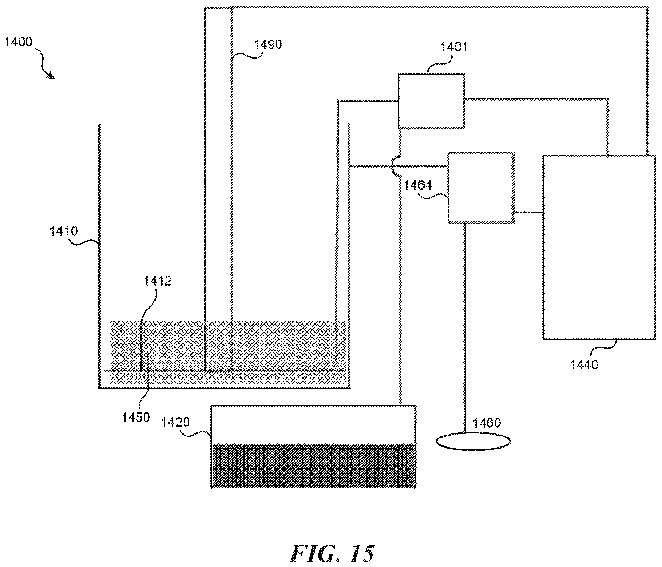

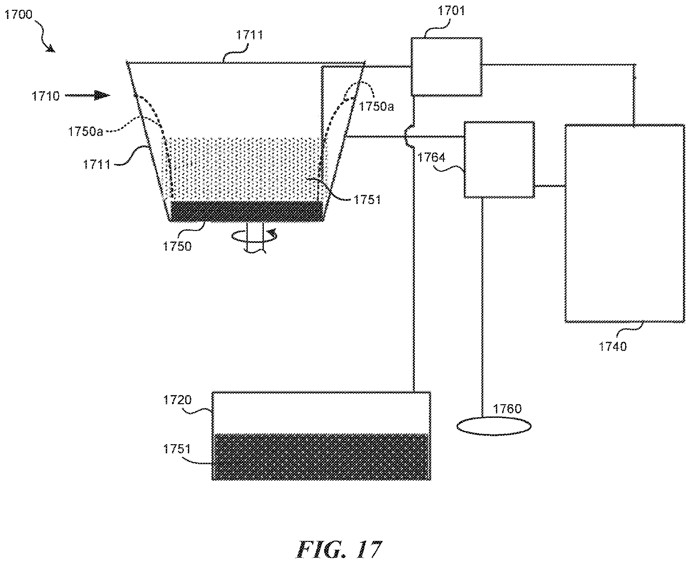

Accordingly, the brew chamber 1310 can have a cavity for receiving coffee grinds, as well as an arrangement for preventing the coffee grinds from entering into the coffee chamber. One such arrangement includes a filter, e.g., a paper, cloth, or metal filter, as discussed above with reference to Figure 1. Another arrangement for preventing the coffee grinds from entering the coffee chamber is a flow path that requires a pump for extraction. After brewing but prior to activating the pump, the grinds are separated from the brewed coffee, for example through compaction of the grinds, allowing only the brewed coffee that is not absorbed by the separated grinds to be subsequently pumped into the brew chamber (in other words, the brewed coffee is separated from the grinds, for example via compaction, after which only the brewed coffee is pumped into the coffee chamber). This system can accordingly include a plunger (such as a plunger typically used with a French press) to perform the compaction process, as discussed later with reference to Figures 14 and 15. In another embodiment, the process can be performed via a centrifuge, which, in at least some embodiments, eliminates the need for a physical filter, as discussed later with reference to Figure 17. In any of these embodiments, the brew chamber is capable of accepting water for brewing coffee via a water introduction device. The coffee chamber receives the brewed coffee after brewing and, in at least some embodiments, the brewed coffee is further processed either in transit from the brew chamber to the coffee chamber or prior to removal from the device for serving. In other embodiments, the brewed coffee is provided directly to the coffee chamber and/or other suitable serving device.

In several of the embodiments described herein, the brew chamber or the coffee chamber, or any intermediate chamber anywhere along the flow path of the brewed coffee is coupled to an accelerated extraction device. The accelerated extraction device causes the brewed coffee to flow from the brew chamber to the coffee chamber at a rate that is higher than the flow rate (which may be zero) of the system prior to the activation of the accelerated extraction device. The accelerated extraction device may include, for example, a pressure source (positive or negative) such as a plunger, a pump, a vacuum piston, or a centrifuge, acting on a combination of brewed coffee and coffee grinds in the brew chamber, and extracting the brewed coffee. For example, the brewed coffee can be forced through a filter/porous material or compacted grinds. Compacted grinds can allow the use of an espresso-like largehole filter. By activating an accelerated extraction device that includes a pressure source, brewed coffee is forced through a filter, rather than simply dripping through the filter by force of gravity, hence accelerating the extraction.

In another embodiment, the accelerated extraction device can rapidly remove brewed coffee from the brew chamber, after the brewed coffee has been separated from the coffee grinds, for example, via compaction. The accelerated removal may be achieved by pumping out the separated brewed coffee into the coffee chamber, or alternatively, pumping the brewed coffee into a secondary filtration vessel whereby the brewed coffee may undergo a second filtration operation. The second filtration operation may be desirable if some coffee grinds are still present in the brewed coffee, after the initial separation and prior to entering the coffee chamber. As this case demonstrates, the brewed coffee may travel through one or more other additional compartments that filter or otherwise process the brewed coffee prior to entering the coffee chamber.

In still further embodiments, the accelerated extraction device may implement other techniques to separate a fixed volume of brewed coffee from a given set of coffee grinds and introduce the brewed coffee into the coffee chamber in a manner that is faster than the separation rate prior to activating the accelerated extraction device.

The system 1300 includes a controller 1340 that has been configured to extract multiple volumes of brewed coffee from a fixed set of coffee grinds. The controller 1340 can be mechanical or electrical; for example, the controller can be a microcontroller that directs the action of the water introduction device and the accelerated extraction device electronically. A representative controller is configured to perform at least the following steps, in the following order.

### Method A:

(1) combine hot water with coffee grinds so that the water will brew coffee for some period greater than three seconds, e.g., cause the water introduction device to introduce water into the brew chamber (where the grinds have already been placed), or cause a grind dispenser to dispense grinds into the brew chamber (where the hot water has already been placed),
(2) cause the accelerated extraction device to accelerate the extraction of at least a portion (but not necessarily all) of the brewed coffee from the brew chamber into the coffee chamber, and
(3) cause the water introduction device to introduce additional water into the brew chamber, which will brew using the same coffee grinds from step 1 and later be combined with the coffee brewed in step 2 prior to serving.

### Method B:

(1) cause the water introduction device to introduce water into the brew chamber, where the water will brew coffee,
(2) allow all or a portion of the water to enter into the coffee chamber via a method that does not utilize an accelerated extraction device,
(3) cause the water introduction device to introduce additional water into the brew chamber, and
(4) cause the accelerated extraction device to extract at least a portion (but not necessarily all) of the additional brewed coffee from the brew chamber into the coffee chamber, combining with the coffee brewed in step 2 prior to serving.

Accordingly, the initial quantity of water can drip (or otherwise pass) through a set of coffee grinds, and the additional water can be rapidly extracted. Accordingly, the accelerated extraction device can accelerate a flow of coffee that would otherwise have a non-zero flow rate. To achieve certain coffee brew characteristics, it may be desirable to conduct a brief drip extraction at a low volume of water, followed by a one or more accelerated extractions. In this arrangement, it is not necessary for the accelerated extraction device to act upon the water/grinds more than once to achieve multiple extractions. In another embodiment of this arrangement, the steps can be reversed, e.g., the coffee formed from an initial volume of water is extracted in an accelerated fashion and the additional volume of water is allowed to extract via gravity or through other forces.

The disclosed systems are not limited to traditional coffee brewing device geometries. Instead, the brew chamber, coffee chamber, and accelerated extraction device can have a variety of suitable configurations/orientations with respect to one another in different embodiments. Furthermore, one or more additional brewing elements and/or brewing chambers may be present in the system, which can facilitate the process of brewing coffee. For example, the brew chamber can include an agitation device, as discussed above with reference to Figures 2 and 6.

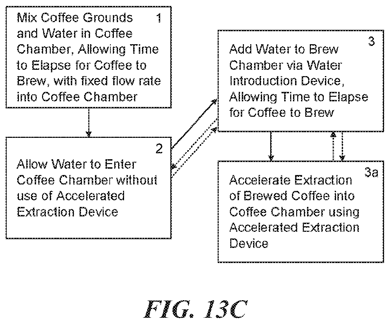

Figures 13B and 13C are diagrams of the coffee brewing Methods A and B, respectively, described above. Solid lines indicate steps required for particular embodiments, and dashed lines indicate optional steps, which may occur several times. For Method A, after step 3, either step 3a or step 2 occurs at least once. For Method B, step 3a occurs at least once.

Embodiments of the foregoing and following processes differ from espresso processes in one or more of multiple ways. For example, the size of the coffee chamber can be at least 200 mL. As another example, the disclosed processes include brewing the coffee, rather than allowing a continuous stream of water through it. As another example, the disclosed process can be achieved using significantly lower positive pressure than the 9-10 bars typically utilized in brewing espresso, or no positive pressure. In embodiments for which a continuous stream is run through the grinds, the stream is intermittent, yielding multiple extractions and hence creating multiple distinct solid-liquid phase partition equilibria.

Figure 14 illustrates a system 1400 having a modified French press arrangement designed to allow for multiple accelerated extractions. A brew chamber 1410 holds the coffee grinds 1450. A corresponding controller 1440 is configured to:
(1) cause water to be introduced to the grinds via a water introduction device 1464 (e.g., a water introduction pump), taking in water from a boiler 1460,
(2) then allow the coffee to brew in the brew chamber 1410 until the grinds 1450 have been exposed to the water a sufficient amount of time to achieve the desired brew characteristics. Time spent brewing affects the character of the brewed coffee, including its strength, bitterness, and flavor profile,
(3) then, once this period has elapsed, direct a French press mesh filter 1412 to descend into the brew chamber 1410 via a piston 1490 (e.g., electrically controlled), with the combination of the French press mesh filter 1412 and the piston 1490 acting as the accelerated extraction device. This causes the brewed coffee to separate from the grinds (as shown in Figure 15),
(4) then causes a brewed coffee extraction pump 1401 to pump the brewed coffee, now separated from the grinds 1450, into a coffee chamber 1420,
(5) then raise the French press mesh filter 1412 via the piston 1490, subsequently introducing a second volume of water into the brew chamber 1410 and onto the previously brewed, non-replaced coffee grinds 1450, and optionally agitating the grinds with an optional agitation device (see Figure 6) to distribute the grinds more evenly throughout the new volume of water, and
(6) repeat steps 1-4 one or more times, to allow the extraction process to repeat with a fresh volume of solvent (water), and subsequently combine the multiple volumes of brewed coffee in the coffee chamber 1420, which can then be emptied by the operator, with the brewed coffee ready for consumption.

In another embodiment, the functions provided by the brewed coffee extraction pump 1401 and the water pump 1464 can be combined into a single pump that is selectively coupled to the boiler 1460 or the brew chamber 1410 via one or more valves under the control of the controller 1440.

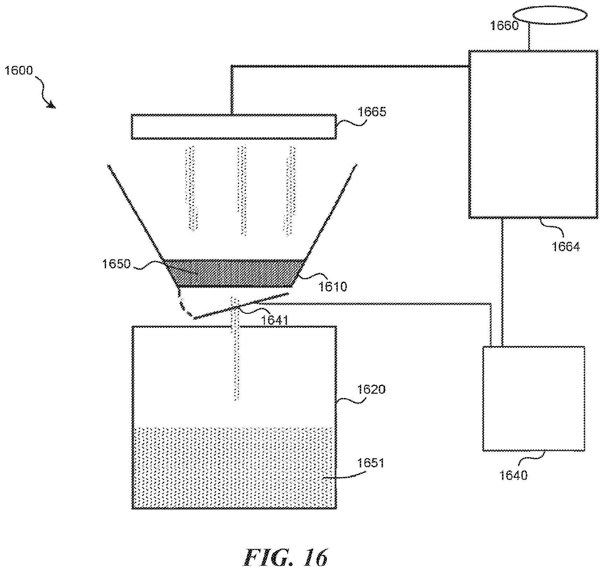

Figure 16 illustrates a system 1600 configured in accordance with another embodiment in which the brewed coffee is restricted from entering the coffee chamber 1620 until a valve is actuated by a corresponding controller 1640. A representative brew chamber 1610 can have a grind basket configuration that serves as a brew chamber and that holds the grinds 1650 while water is dripped over the grinds via a water pump 1664 or via gravity, or via another pressure source. The water can be delivered from a boiler 1660 to a spray head 1665 for delivery. The coffee chamber 1620 can include a carafe or other holding vessel that receives and contains brewed coffee 1651. The controller 1640 can:
(1) direct the pump 1664, serving as the water introduction device, to direct a volume of water from the boiler 1660 into the brew chamber 1610,
(2) then wait a pre-specified, pre-calculated time (e.g., for a given weight of grinds), after which the coffee has brewed sufficiently without any communication between the brew chamber 1610 and the coffee chamber 1620, after which a coffee flow path valve 1641 is actuated, opening a flow path between the brew chamber 1610 and the coffee chamber 1620,
(3) then wait a pre-specified, pre-calculated time (e.g., for a given weight of grinds), after which the water has substantially completed brewing by dripping into the coffee chamber 1620,
(4) then close the coffee flow path valve 1641 to close the flow path from the grind basket (brew chamber 1610) to the carafe (coffee chamber 1620),
(5) then introduce a second volume of water into the brew chamber 1610 to allow the extraction process to repeat with a fresh volume of solvent (e.g., water).

In the foregoing embodiment, the valve 1641 operates as an accelerated extraction device. Before the valve 1641 is actuated (opened), the brewed coffee 1651 is in liquid communication with the grinds 1650 in the brew chamber 1610. When the valve 1641 is opened, the pressure differential (created by the hydraulic head of the brewed coffee 1651 in the brew chamber 1610) forces the brewed coffee into the coffee chamber 1620.

Figure 17 illustrates a representative example of a centrifugal system 1700 designed to allow for multiple accelerated extractions. The brew chamber 1710 includes a centrifuge 1711 that holds coffee grinds 1750. A corresponding controller 1740 is configured to:
(1) cause water to be introduced to the grinds 1750 via a water introduction pump 1764, acting as the water introduction device, taking in water from a boiler 1760,
(2) then allow the coffee to brew in the centrifuge 1711 until the grinds 1750 have been exposed to the water a sufficient amount of time for the desired brew flavor characteristics,
(3) then, once this period has elapsed, direct the centrifuge 1711 to spin at a sufficient rate to cause the brewed grinds 1750 to compress along the sides of the brew chamber 1710 (as shown in dashed lines), separating the brewed coffee 1751 from the compressed grinds 1750a,
(4) then cause a brewed coffee extraction pump 1701 to pump the brewed coffee 1751, now separated from the grinds 1750a, into a coffee chamber 1720, collecting in the coffee chamber,
(5) then subsequently introduce a second volume of water into the centrifuge 1711 combining with the previously brewed, non-replaced coffee grinds 1750, and optionally agitating the grinds with an optional agitation device (not shown) to distribute the grinds more evenly throughout the new volume of water / agitate during the brew cycle, and
(6) repeat steps 1-4 one or more times, hence allowing the extraction process to repeat with a fresh volume of solvent, and subsequently combining the multiple volumes of brewed coffee in the coffee chamber 1720, which can then be emptied by the operator, with the brewed coffee ready for consumption.

### 3.0 Representative Systems with Removable Brew Chambers

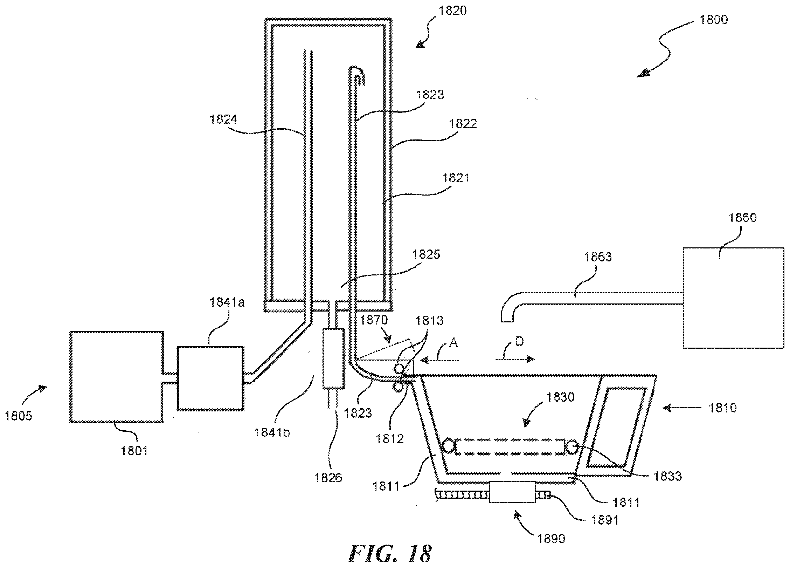

Figures 18-29C illustrate coffee brewing systems that include removable brew chambers configured in accordance with several embodiments of the present technology. Such systems can be used to produce coffee via single-extraction and/or multiple-extraction processes. Generally, the systems include a vacuum source that provides the pressure differential used to direct coffee from the brew chamber to the coffee chamber. Accordingly, the systems can include a releasable connection along a flow path that joins and includes the brew chamber and the coffee chamber. In particular embodiments, the releasable connection in turn includes a releasable vacuum seal. In other embodiments, as described further later, the pressure differential device can include a pressure source.

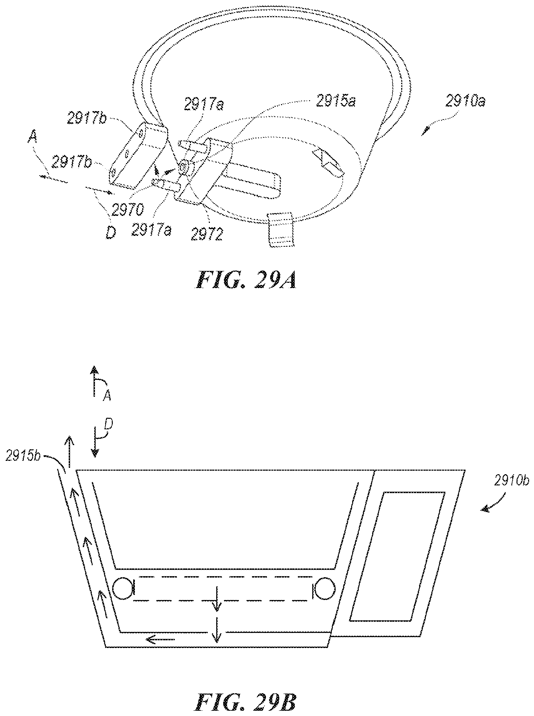

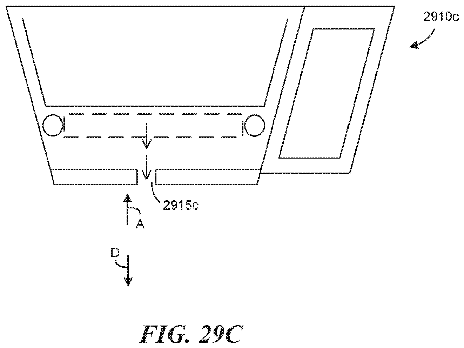

Figure 18 is a partially schematic illustration of a representative system 1800 that includes a coffee chamber 1820 releasably coupled to a brew chamber 1810 via a coffee outlet coupling 1812. The system can be configured for single and/or multiple extraction processes. The brew chamber 1810 carries a filter device 1830 that can be sealed within the brew chamber 1810 via a sealing element 1833, e.g., an O-ring, gasket, or other suitable element. The brew chamber 1810 is releasably coupled to the coffee chamber 1820, e.g. via a coffee outlet conduit 1811 (carried by and/or attached to the brew chamber 1810) and a coffee inlet conduit 1823 (carried by and/or attached to the coffee chamber 1820). In other embodiments, the system 1800 includes other arrangements that provide a releasable and reattachable fluid communication link between the brew chamber 1810 and the coffee chamber 1820. In a particular embodiment, the brew chamber 1810 is coupled and/or attached via a single generally horizontal motion along only a single generally horizontal axis, as indicated by arrow A, and decoupled and/or detached via a single, generally horizontal motion in the opposite direction, as indicated by arrow D. In other embodiments, the motion can include multiple steps along only a single axis, e.g., a ratchet-type motion. As used herein, "generally horizontal" refers to an orientation that is within ±20° of horizontal. In particular embodiments, the orientation can be within ±10°, ±5° or ±1° of horizontal. The same ranges apply to single-axis motion along other axes, e.g., vertical axes, as described later with reference to Figures 29B, 29C. In any of these embodiments, the coupling 1812 can include an O-ring 1813 or any other suitable pressure-tight, releasable connector element. In other embodiments (as discussed later with reference to Figures 29A-29C), the coupling/decoupling motion can be along other axes. In general, the connection can include a quick-disconnect connection that facilitates a rapid and simple process for coupling and decoupling the brew chamber 1810. This is distinct from existing arrangements that require at least a partial deconstruction or disassembly process to remove the brew chamber.

In a particular embodiment, the system 1800 can also include a locking mechanism 1870, shown schematically as a latch in Figure 18, to releasably secure the brew chamber 1810 in position when it is attached. The locking mechanism 1870 can be disengaged and/or unlocked to allow the brew chamber 1810 to be removed. In a particular embodiment, the locking mechanism 1870 is manually disengaged, e.g., by rotating the latch mechanism upwardly, as show in dotted lines in Figure 18. Accordingly, the motion required to unlock the brew chamber 1810 is different than (and in a different direction than) the motion required to disengage the brew chamber 1810. In other embodiments, the unlocking motion can be along the same axis as the disengaging motion (e.g., pushing to unlock and pulling to disengage). In still further embodiments, the locking mechanism 1870 can be automatically locked and unlocked. For example, the locking mechanism 1870 can include an actuator that automatically disengages the locking mechanism 1870 when the level of coffee within the brew chamber 1810 falls below a threshold level, e.g., indicating that the process of brewing the coffee and directing the coffee into the coffee chamber 1820 is complete. An advantage of the locking mechanism is that it can prevent the user from inadvertently removing the brew chamber 1810 when it still contains a significant amount of coffee.

In particular embodiments, other aspects of the system 1800 can be automated, in addition to or in lieu of automating the locking mechanism 1870. For example, the system 1800 can include an automated driver 1890 that automatically attaches and detaches the brew chamber 1810. In a particular aspect of this embodiment, the automated driver 1890 can include a lead screw 1891 that drives the brew chamber into engagement with a coupling at the end of the coffee inlet conduit 1823, as indicated by arrow A, and out of engagement with the coffee inlet conduit 1823, as indicated by arrow D. One or more rails or other guide elements can guide the motion of the brew chamber 1810 and prevent it from rotating under the torque imparted by the lead screw 1891.

The system 1800 can include a boiler or water heater 1860 that heats water and directs the heated water into the brew chamber 1810 via a water inlet conduit 1863. In a representative embodiment, the brew chamber 1810 includes an agitator (not shown in Figure 18) that stirs the coffee as it is being brewed. The agitator can include any of the arrangements described above. An advantage of the agitator is that it can produce more uniform and more completely brewed coffee through more uniform dispersal of the grinds throughout the added water, and can eliminate the need for a more complex showerhead-type device for introducing the hot water into the brew chamber 1810. Eliminating the showerhead device can also reduce thermal losses during the brewing process. Optionally, the system 1800 can include a heater (e.g., an infrared lamp, silicone rubber heater, and/or induction heater) co-located with the brew chamber 1810 to keep the contents of the brew chamber 1810 hot during the brewing process.

As described above, the brew chamber 1810 can be releasably coupled to the coffee chamber 1820, e.g., via a releasable connection to the coffee inlet conduit 1823. The coffee inlet conduit 1823 can have an inverted U-shaped design, as indicated in Figure 18 so as to deliver coffee effectively into the coffee chamber 1820. The coffee chamber 1820 can include an outer wall 1822 and an inner wall 1821, and is coupled to a pressure differential device 1805, e.g., a vacuum source 1801, via a vacuum outlet conduit 1824. A vacuum valve 1841a controls the fluid communication between the vacuum source 1801 and the coffee chamber 1820. When the vacuum valve 1841a is open, the vacuum applied to the coffee chamber 1820 draws coffee from the brew chamber 1810 into the coffee chamber 1820 via the coffee outlet conduit 1811 and the coffee inlet conduit 1823. When the vacuum valve 1841a is closed (e.g., after all or generally all the coffee in the brew chamber 1810 has been directed to the coffee chamber 1820), the coffee in the coffee chamber 1820 may be removed by opening a release valve 1841b, so as to direct the coffee through a release valve inlet 1825 and release valve outlet 1826 into a suitable carafe or other vessel. As used herein, the term "generally all" as applied to the amount of coffee removed from the brew chamber means that no coffee is flowing out of the brew chamber, or the flow of coffee has been reduced to a drip (as distinguished from a stream).

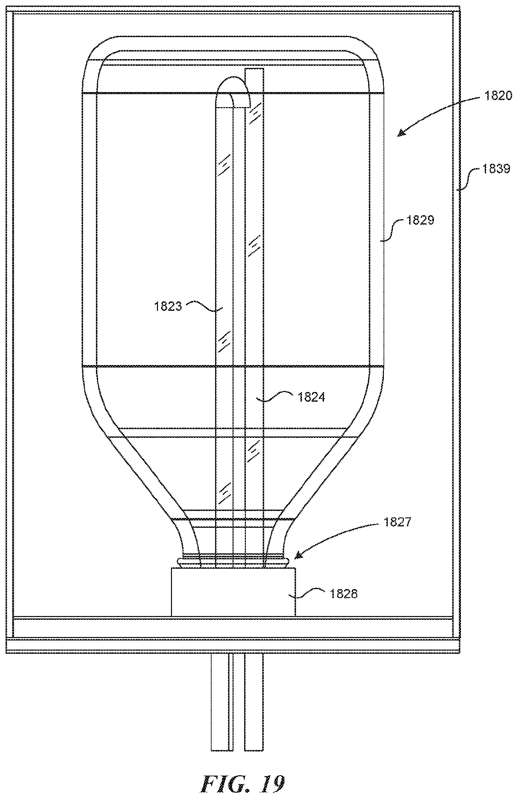

Figure 19 illustrates a particular arrangement in which the coffee chamber 1820 includes an inverted vessel 1829 positioned within a housing 1839. The vessel 1829 can be releasably connected to the housing 1839 via an interface 1827. In a particular embodiment, the interface 1827 includes a threaded attachment between an end of the vessel 1829 and a correspondingly threaded base 1828 of the housing 1839. Accordingly, the vessel 1829 can be easily removed, e.g., for cleaning and/or servicing.

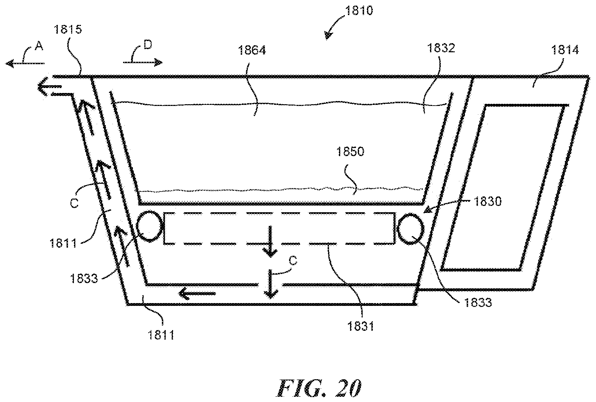

Figures 20-23 illustrate further features of the brew chamber 1810 in accordance with particular embodiments of the present technology. Beginning with Figure 20, the brew chamber 1810 can have a partially conical shape, and can include a handle 1814 that allows the brew chamber 1810 to be easily moved back and forth for attachment (as indicated by arrow A) and detachment (as indicated by arrow D). The handle 1814 can be formed from, or can include, an insulative material to make it more comfortable to grasp when the brew chamber 1810 is hot. Suitable materials include plastic, rubber and silicone. The brew chamber 1810 itself can be formed from stainless steel or another suitable food-grade material. The brew chamber 1810 can be open-topped, or can include a lid. When a lid is included, it can be deliberately not sealed, or can include releasable seal (e.g., an openable orifice) so as to allow the vacuum source 1801 (Figure 18) to withdraw the brewed coffee.

In still a further embodiment, the lid can remain sealed to facilitate the brew chamber 1810 being pressurized (e.g., in a manner generally similar to that described above with reference to Figures 8 and 9). Accordingly, the vacuum source 1801 described above with reference to Figure 18 can be replaced with a pressure source that is coupled directly to the brew chamber 1810 rather than to the coffee chamber 1820.

The filter device 1830 within the brew chamber 1810 can include a filter platform or support 1831 releasably sealed to the sides of the brew chamber 1810 via an O-ring 1833. The filter platform 1831 can releasably support and/or carry a filter element 1832. The filter platform 1831 can be formed from stainless steel, PTFE, and/or another suitable food grade material. The filter element 1832 can include paper, metal, plastic, cloth, glass, and/or other suitable materials configured for single use or multiple uses. In any of these embodiments, coffee grounds 1850 are placed on or in the filter element 1832 during operation, before or after the brew chamber 1810 is coupled to the coffee chamber 1820, depending upon the particular embodiment. Hot water introduced into the brew chamber 1810 forms brewed coffee 1864. Once the brewing process is complete, the vacuum applied by the vacuum source 1801 (Figure 18) directs the brewed coffee 1864 downwardly through the filter device 1830, laterally through the coffee outlet conduit 1811, and upwardly toward a coffee outlet port 1815, as indicated by arrows C.

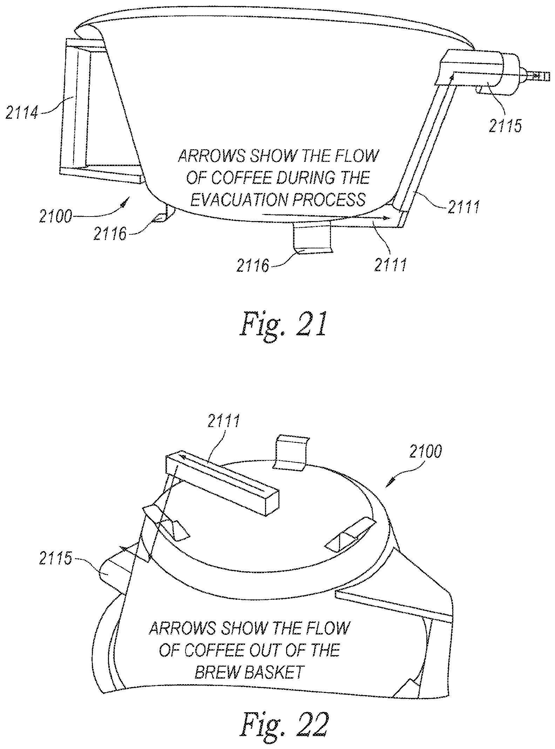

Figure 21 is a side view of a representative brew chamber 2100 having a configuration generally similar to that discussed above with reference to Figure 20. The brew chamber 2100 includes a handle 2114 positioned opposite from a corresponding coffee outlet port 2115. The coffee outlet port 2115 receives brewed coffee from within the brew chamber 2100 via a coffee outlet conduit 2111. Pedestals, feet or other support elements 2116 positioned at the base of the brew chamber 2100 allow the brew chamber 2100 to be placed in a stable configuration on any flat surface (despite the presence of the coffee outlet conduit 2111) when removed from the coffee brewing system, for example, to fill the brew chamber 2100 with coffee grounds. The low profile orientation of the coffee outlet conduit 2111 (e.g., running horizontally beneath the brew chamber 2100) can provide advantages relative to existing brew chambers. In particular, some existing brew chambers, such as those commonly used in siphon brewing devices, include a long, downwardly-extending tube for draining the coffee within. As a result, the coffee chamber cannot be placed on a flat surface without the aid of a tall stand. Such an arrangement can be cumbersome because (a) it requires an additional piece of equipment (the stand), and/or (b) it can be more easily knocked over (due to the height of the stand).

Figure 22 shows the brew chamber 2100 in an inverted position, further illustrating the coffee outlet conduit 2111 and the coffee outlet port 2115.

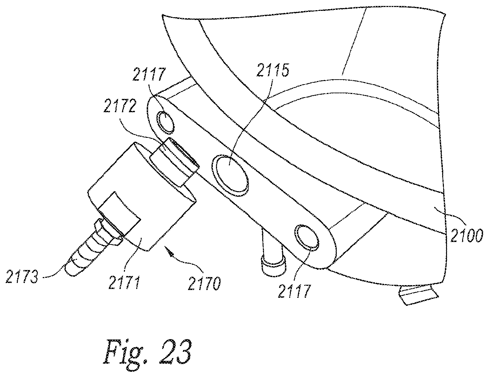

Figure 23 is an enlarged illustration of the coffee outlet port 2115. In a particular embodiment, the brew chamber 2100 can include one or more alignment features 2117 (e.g., apertures) that mate with corresponding alignment features (e.g., projections) carried by the portion of the brewing system to which the brew chamber 2100 is connected. A coupling 2170 provides a fluid-tight (e.g., air-tight), releasable connection between the brew chamber 2100 and the coffee inlet conduit 1823 (Figure 18). In a particular embodiment, the coupling 2170 includes a coupling body 2171 carrying an O-ring 2172 that sealably mates with the coffee outlet port 2115. The coupling body 2171 can further include a connector 2173 for connection to the coffee inlet conduit 1823 (Figure 18). In another embodiment, the brew chamber 2011 can include one or more projections that mate with corresponding alignment apertures carried by the portion of the brewing system to which the brew chamber 2100 is connected.

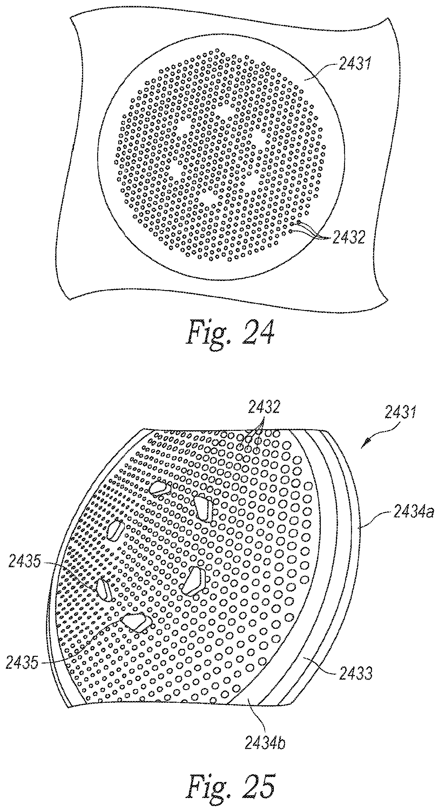

Figure 24 illustrates a representative filter platform 2431, which supports a corresponding filter element, which in turn supports the coffee within the brew chamber 2100 described above. The filter platform 2431 can include openings 2432 that allow the brewed coffee to pass through. In particular embodiments, the openings are made large enough to allow brewed coffee to pass through at a suitable rate, yet small enough to prevent a filter element (e.g., a paper filter element) from tearing under the force applied to by the vacuum source 1801 (Figure 18). In a representative embodiment, the openings 2432 have a diameter of about 0.125 inch.

Figure 25 is an enlarged illustration of the filter platform 2431, as seen from below. The filter platform 2431 includes an upper portion 2434a, a lower portion 2434b, and a sealing element 2433 (e.g., an O-ring) between the upper and lower portions 2434a, 2434b. The upper and lower portions support the O-ring 2433 in an orientation that allows it to seal against the sidewalls of the brew chamber 1810. The lower portion 2434b can include standoffs 2435 that offset the exits of the openings 2432 from the base of the brew chamber 1810 into which the filter platform 2431 fits. Accordingly, brewed coffee can readily pass through the openings 2432 into the gap beneath the lower portion 2434b, and then to the coffee outlet conduit 2111 (Figure 21). The standoffs 2435 can be sized and positioned to prevent or at least restrict the filter platform 2431 from bowing downwardly under the force provided by the vacuum source 1801 (Figure 18).

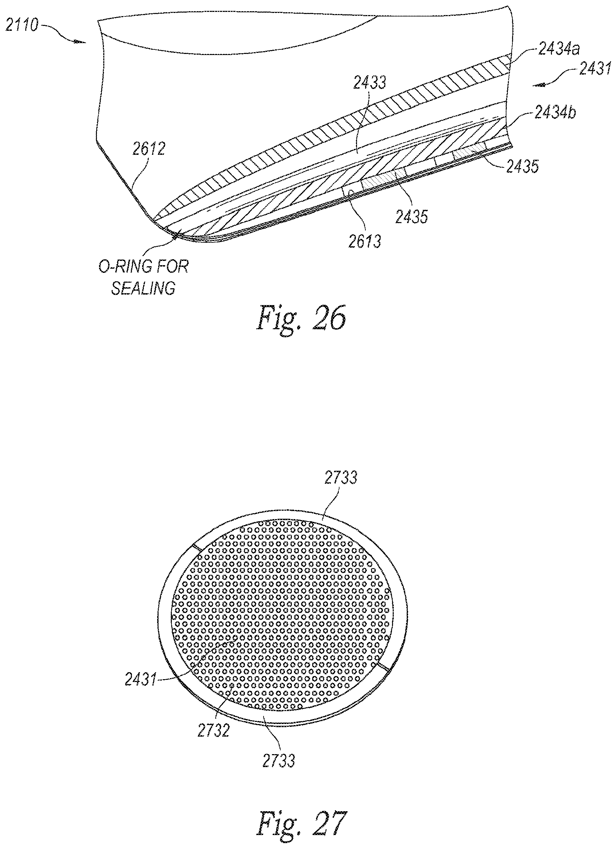

Figure 26 is a cut-away illustration of a representative brew chamber 2110 in which the filter platform 2431 is positioned. As shown in Figure 26, the O-ring 2433 seals against an inwardly facing brew chamber wall 2612, and the standoffs 2435 position the downwardly facing surface of the lower portion 2434b away from the floor 2613 of the brew chamber.

In a particular embodiment, a generally conical, flat-bottomed paper or metal filter can be placed on top of the upper portion 2434a for support. In another embodiment, the filter platform 2431 can support a flat filter element. For example, Figure 27 illustrates a flat, metallic (e.g., stainless steel) mesh filter element 2732 positioned on the upper surface of the filter platform 2431 and secured in position with one or more retention elements 2733. In an embodiment shown in Figure 27, the retention element 2733 is a ring-line structure that interfaces and rotates to lock with grooved slots in the filter platform 2431 and seals the filter element 2732 to secure the filter element 2732 in place.

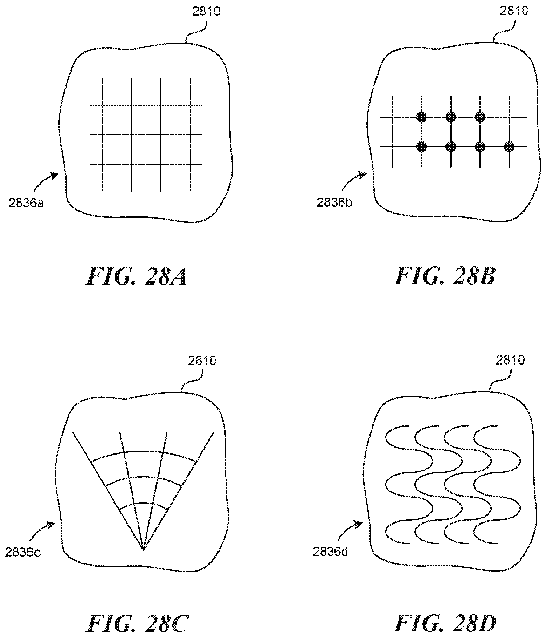

In the embodiments shown in Figures 25 and 26, the standoffs 2435 project from the bottom of the filter platform 2431 to offset it from the base of the brew chamber 2110. In other embodiments, the brew chamber 2110 itself can include features that allow brewed coffee to pass from the brew chamber into the coffee outlet conduit 2111 (Figure 21). For example, Figures 28A-28D schematically illustrate the base of a corresponding brew chamber 2810 (as seen from above) along with corresponding indentation patterns 2836a-2836d. The indentation patterns can be machined, milled, stamped, cast, molded, and/or otherwise formed into the floor 2813 of the brew chamber, and can direct brewed coffee exiting the brew chamber to the entrance of the coffee outlet conduit 2111, eliminating the need for a filter platform 2431.

In a particular embodiment described above with reference to Figure 20, the coffee outlet port 1815 is positioned toward the top of the corresponding brew chamber 1810. In another embodiment, illustrated in Figure 29A, a representative brew chamber 2910a can include a coffee outlet port 2915a positioned toward the bottom of the brew chamber 2910a. A corresponding coupling 2970 provides a releasable connection between the brew chamber 2910a and the rest of the coffee brewing system, and can include an O-ring 2972 and multiple alignment features, shown as first alignment features 2917a and second alignment features 2917b. In a particular embodiment, the first alignment features 2917a can include tabs, projections, or pins (e.g., tapered pins), and the second alignment features 2917b can include corresponding apertures that receive the tabs, projections, or pins to guide the motion of the brew chamber 2910a as it is attached (as indicated by arrow A) and detached (as indicated by arrow D).

In further embodiments, the brew chamber can be attached via motion in directions other than generally horizontal. For example, referring now to Figure 29B, a representative brew chamber 2910b includes a coffee outlet port 2915b that faces upwardly. Accordingly, the brew chamber 2910b can be attached by moving it upwardly as indicated by arrow A, and can be detached by moving it downwardly as indicated by arrow D, e.g., along only a generally vertical axis. In such an embodiment, the brew chamber 2910b can be further secured to the overall system, for example, by rotating a horizontal flange carried by the brew chamber 2910c into a horizontal slot carried by the structure to which the brew chamber 2910b is attached. Accordingly, the brew chamber 2910b will not fall downwardly from the rest of the system 1800 after it is attached.

In another embodiment shown in Figure 29C, a representative brew chamber 2910c can include a downwardly facing coffee outlet port 2915c that can be engaged by moving the brew chamber 2910c downwardly (as indicated by arrow A), and can be disengaged by moving the brew chamber upwardly as indicated by arrow D, e.g., along only a generally vertical axis.

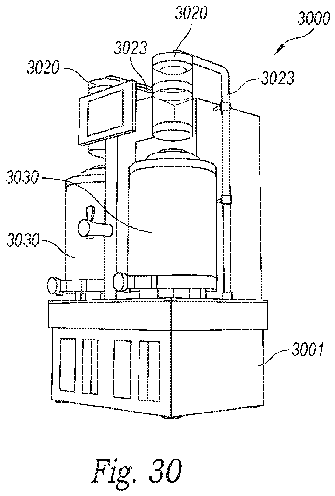

Figure 30 is a partially schematic illustration of a coffee brewing system 3000. The system 3000 can include two coffee chambers 3020, each of which receives coffee from a corresponding brew chamber positioned within a housing 3001, via corresponding coffee inlet conduits 3023. In a particular embodiment, the system 3000 can include two corresponding coffee urns 3030, each of which receives coffee from a corresponding one of the coffee chambers 3020. Other system features generally similar to those discussed above (including, for example, removable or nonremovable brew chambers, a controller, an agitation device, an accelerated extraction device, among others) can be housed out of sight within the housing 3001.

One advantage of brew chambers having the coffee outlet port toward the top of the brew chamber is that the likelihood for hot brewed coffee to spill from the brew chamber if the brew chamber is inadvertently removed before being drained, is significantly reduced. Accordingly, if the brew chamber includes a coffee outlet port toward the bottom of the brew chamber, as described above with reference to Figures 29A and 29C, the brew chamber can include a valve that is normally closed, and opens only when the brew chamber is successfully attached or engaged.

In any of the foregoing embodiments, the brew chambers can include quick-release, fluid-tight connections between the brew chamber and the rest of the brewing system. One advantage of this feature is that it allows the brew chambers to be quickly and easily detached so as to remove spent grounds, and then quickly and easily reattached with fresh grounds onboard. Another advantage is that it allows the brew chamber to be easily removed for periodic cleaning.

Still another advantage of at least some of the foregoing embodiments is that the entire volume of hot brewing water can remain in contact with the coffee grinds for a significantly longer period of time than is possible with drip brewers, which drip coffee extracted at varying concentrations throughout the brew process into a coffee holding vessel, such as a carafe. This feature, alone or in combination with agitating the coffee and grounds while in the brew chamber, can increase the uniformity of the extraction, which is commercially desirable. In addition, the force of the vacuum can quickly remove the entire volume of brewed coffee from the brew chamber once the desired extraction point has been achieved. Accordingly, this provides the operator with the ability to control the brew time with a higher degree of specificity than drip brewers, while also ensuring that coffee grinds are not exposed to different water levels for long periods, which would result in a non-uniform extraction.

From the foregoing, it will be appreciated that specific embodiments of the technology have been described herein for purposes of illustration, but that various modifications may be made without deviating from the technology. For example, the pressurized brew chamber described above with reference to Figure 9 can be applied to any of the foregoing embodiments. A representative one-liter coffee maker can have a filter diameter of about 5 inches, and a representative two-liter coffee make can have a filter diameter of about 7 inches. In other embodiments, the filter diameters can have other suitable values, e.g., depending on the coffee volume, that produce relatively shallow grind beds suitable for multiple, quick extractions. For example, the filter can have a diameter of 12 inches for a 4-6-liter capacity, or a diameter of 1.5-2 inches for a single cup. Other suitable filter diameters range from 3 inches to 17 inches. The capacity of the brew chamber and/or the coffee chamber can range from about 1 liter or less (e.g., about 200 mL, which is significantly larger than typical espresso makers) to about 12 liters in particular embodiments. The brew chamber and/or the coffee chamber can have conical or partially conical shapes in certain embodiments, and can have other shapes (e.g., generally cylindrical shapes) in other embodiments. In particular embodiments, a pressure source or a vacuum source is used to produce the pressure differential of at least 8.0 kPa (60 torr) between the brew chamber and the coffee chamber of the system. In other embodiments, the pressure source and the vacuum source can be activated simultaneously to produce the desired pressure differential. The first and second phases described above can be repeated once (as third and fourth phases), twice (as fifth and sixth phases) or more than twice.

In a particular embodiment, an operator (or automated controller) adds an initial volume of water to grinds, then quickly extracts and discards it, then performs multiple subsequent extractions on the already-wet grinds, and combines two or more of the subsequent extractions. Accordingly, only some of the extractions are combined, and the grinds are not necessarily dry for the first of the combined extractions. This process can be desirable, for example, for removing caffeine prior to performing/combining extractions that will be consumed. In particular, the caffeine typically extracts first, so discarding a quick initial extraction can remove some or all of the caffeine when desired.

The grinds can also have other dimensions in other embodiments. For example, in at least some embodiments for which the system produces brewed coffee via multiple extractions, the grind diameter can be larger than 600µ. In particular such embodiments, the grind diameter can range up to about 1000µ.

Certain aspects of the technology described in the context of the particular embodiments may be combined or eliminated in other embodiments. For example, the agitation device described above can be eliminated in particular embodiments. In some embodiments, the aspects of the brewing processes and systems described above in the context of an automated or partially automated arrangement can be conducted in a manual arrangement, and vice versa. A particular embodiment of the foregoing devices that includes accelerated extraction provided by a vacuum device may be used to brew tea (via multiple extractions) as well as (or instead of) coffee. Further, while advantages associated with certain embodiments of the technology have been described in the context of those embodiments, other embodiments may also exhibit such advantages, and not all embodiments need necessarily exhibit such advantages to fall within the scope of the present disclosure, as defined in the appended claims.

## Claims

1. A beverage brewing system, comprising:
a brew chamber (110);
an extraction chamber (120) having a capacity of at least 200 ml;
a filter device (130) positioned along a fluid flow path joining and including the brew chamber (110) and the extraction chamber (120);
a pressure differential device configured to apply a pressure differential between the brew chamber (110) and the extraction chamber (120) of at least 8.0 kPa (60 torr);
a hot water source coupled to the brew chamber (110); and
a controller programmed with instructions that, when executed:
during a first brewing process, direct a first volume of hot water into the brew chamber (110) and into contact with a set of grounds to form a first beverage volume;
activate the pressure differential device (105) to force the first beverage volume out of the brew chamber (110);
during a second brewing process, performed after the first beverage volume has been removed from the brew chamber (110), direct a second volume of hot water into the brew chamber (110) and into contact with the set of grounds to form a second beverage volume; and
activate the pressure differential device (105) to force the second beverage volume from the brew chamber (110) into the extraction chamber (120) to mix with the first beverage volume in the extraction chamber (120).

2. The system of claim 1 wherein:
the instructions, when executed, direct the first volume of hot water into contact with the set of grounds while preventing the grounds from leaving the brew chamber (110), and direct the second volume of hot water into contact with the set of grounds while preventing the grounds from leaving the brew chamber (110).

3. The system of claim 2 wherein the brew chamber (110) is positioned below the extraction chamber (120) and wherein the system further comprises:
a conduit connecting the brew chamber (110) and the extraction chamber (120); and
a quick-release liquid-tight connection between the brew chamber (110) and the conduit;
and wherein:
the brew chamber (110) is moveable toward the conduit along a generally horizontal axis to releasably couple the brew chamber (110) and the conduit, and is moveable away from the conduit along the generally horizontal axis to decouple the brew chamber (110) from the conduit;
further wherein:
the instructions, when executed, retain at least one of the first and second volumes of hot water in the brew chamber (110) for a period of from 5 seconds to 5 minutes before being moved from the brew chamber (110).

4. The system of any preceding claim, further comprising a quick-release, air-tight connection between the brew chamber (110) and the extraction chamber (120).

5. The system of claim 4, further comprising a conduit connecting the brew chamber (110) and the extraction chamber (120), and wherein the connection includes an o-ring positioned between the brew chamber (110) and the conduit.

6. The system of claim 5 wherein the brew chamber (110) is moveable toward the conduit along a generally horizontal axis to releasably couple the brew chamber (110) and the conduit, and is moveable away from the conduit along the generally horizontal axis to decouple the brew chamber (110) from the conduit.

7. The system of claim 5 wherein the brew chamber (110) is moveable toward the conduit along a generally vertical axis to releasably couple the brew chamber (110) and the conduit, and is moveable away from the conduit along the generally vertical axis to decouple the brew chamber (110) from the conduit.

8. The system of any preceding claim wherein the filter device includes a reuseable support element.

9. The system of any preceding claim, further comprising an agitation device coupled to the brew chamber (110) to agitate the grounds and hot water in the brew chamber (110).

10. The system of claim 1, further comprising:
an air-tight connection between the brew chamber (110) and the extraction chamber (120), the connection being changeable from a coupled configuration to an uncoupled configuration by motion along a only single axis.

11. The system of claim 10, further comprising a locking mechanism positioned to releasably secure the air-tight connection in the coupled configuration.

12. A method for brewing a beverage, comprising:
placing grounds in a brew chamber (110);
placing a first volume of heated water in the brew chamber (110) and in contact with the grounds to form a first beverage volume;
applying a pressure differential between the brew chamber (110) and an extraction chamber (120) of at least 8.0 kPa (60 torr) to extract the first beverage volume from the brew chamber (110) through a filter element (130);
after the first beverage volume has been removed from the brew chamber (110), placing a second volume of heated water in the brew chamber (110) in contact with the grounds to form a second beverage volume; and
applying a pressure differential between the brew chamber (110) and the extraction chamber (120) of at least 8.0 kPa (60 torr) to extract the second beverage volume from the brew chamber (110) through the filter element (130) and into the extraction chamber (120) to mix with the first beverage volume.

13. The method of claim 12 wherein the grounds are first grounds, and wherein the method further comprises:
disconnecting an air-tight seal along a fluid flow path joining and including the brew chamber (110) and the extraction chamber (120);
removing the first grounds from the brew chamber (110);
placing second grounds in the brew chamber (110); and
releasably connecting the air-tight seal along the fluid flow path.

14. The method of claim 13 wherein disconnecting includes moving the brew chamber (110) away from the extraction chamber (120) in a first direction along a generally horizontal axis, and wherein connecting includes moving the brew chamber (110) toward the extraction chamber (120) in a second direction opposite the first direction along the generally horizontal axis.

15. The method of claim 13 wherein disconnecting includes moving the brew chamber (110) away from the extraction chamber (120) in a first direction along a generally vertical axis, and wherein connecting includes moving the brew chamber (110) toward the extraction chamber (120) in a second direction opposite the first direction along the generally vertical axis.

## Patentansprüche

1. Getränkebrühsystem, umfassend:
eine Brühkammer (110);
eine Extraktionskammer (120) mit einer Kapazität von mindestens 200 ml;
eine Filtervorrichtung (130), die entlang eines Fluidflusswegs positioniert ist, der die Brühkammer (110) und die Extraktionskammer (120) verbindet und beinhaltet;
eine Druckdifferenzvorrichtung, die dafür konfiguriert ist, eine Druckdifferenz zwischen der Brühkammer (110) und der Extraktionskammer (120) von mindestens 8,0 kPa (60 Torr) anzuwenden;
eine Heißwasserquelle, die an die Brühkammer (110) gekoppelt ist; und
eine Steuerung, die mit Anweisungen programmiert ist, die beim Ausführen:
während eines ersten Brühvorgangs ein erstes Heißwasservolumen in die Brühkammer (110) und in Kontakt mit einer Mahlgutmenge leiten, um ein erstes Getränkevolumen zu bilden;
die Druckdifferenzvorrichtung (105) aktivieren, um das erste Getränkevolumen aus der Brühkammer (110) zu zwingen;
während eines zweiten Brühvorgangs, der durchgeführt wurde, nachdem das erste Getränkevolumen aus der Brühkammer (110) entfernt wurde, ein zweites Heißwasservolumen in die Brühkammer (110) und in Kontakt mit der Mahlgutmenge leiten, um ein zweites Getränkevolumen zu bilden; und
die Druckdifferenzvorrichtung (105) aktivieren, um das zweite Getränkevolumen aus der Brühkammer (110) in die Extraktionskammer (120) zu zwingen, zum Mischen mit dem ersten Getränkevolumen in der Extraktionskammer (120).

2. System nach Anspruch 1, wobei:
die Anweisungen, beim Ausführen, das erste Heißwasservolumen in Kontakt mit der Mahlgutmenge leiten, während verhindert wird, dass das Mahlgut die Brühkammer (110) verlässt, und das zweite Heißwasservolumen in Kontakt mit der Mahlgutmenge leiten, während verhindert wird, dass das Mahlgut die Brühkammer (110) verlässt.

3. System nach Anspruch 2, wobei die Brühkammer (110) unterhalb der Extraktionskammer (120) positioniert ist und wobei das System ferner umfasst:
eine Leitung, die die Brühkammer (110) und die Extraktionskammer (120) verbindet; und
eine flüssigkeitsdichte Schnelltrennverbindung zwischen der Brühkammer (110) und der Leitung;
und wobei:
die Brühkammer (110) hin zu der Leitung entlang einer allgemein horizontalen Achse bewegbar ist, um die Brühkammer (110) und die Leitung lösbar zu koppeln, und weg von der Leitung entlang der allgemein horizontalen Achse bewegbar ist, um die Brühkammer (110) von der Leitung abzukoppeln;
ferner, wobei:
die Anweisungen, beim Ausführen, mindestens eines der ersten und zweiten Heißwasservolumen in der Brühkammer (110) für einen Zeitraum von 5 Sekunden bis 5 Minuten, vor dem Bewegen aus der Brühkammer (110), zurückhalten.

4. System nach einem vorhergehenden Anspruch, ferner umfassend eine luftdichte Schnelltrennverbindung zwischen der Brühkammer (110) und der Extraktionskammer (120).

5. System nach Anspruch 4, ferner umfassend eine Leitung, die die Brühkammer (110) und die Extraktionskammer (120) verbindet, und wobei die Verbindung einen zwischen der Brühkammer (110) und der Leitung positionierten O-Ring beinhaltet.

6. System nach Anspruch 5, wobei die Brühkammer (110) hin zu der Leitung entlang einer allgemein horizontalen Achse bewegbar ist, um die Brühkammer (110) und die Leitung lösbar zu koppeln, und weg von der Leitung entlang der allgemein horizontalen Achse bewegbar ist, um die Brühkammer (110) von der Leitung abzukoppeln.

7. System nach Anspruch 5, wobei die Brühkammer (110) hin zu der Leitung entlang einer allgemein vertikalen Achse bewegbar ist, um die Brühkammer (110) und die Leitung lösbar zu koppeln, und weg von der Leitung entlang der allgemein vertikalen Achse bewegbar ist, um die Brühkammer (110) von der Leitung abzukoppeln.

8. System nach einem vorhergehenden Anspruch, wobei die Filtervorrichtung ein wiederverwendbares Tragelement beinhaltet.

9. System nach einem vorhergehenden Anspruch, ferner umfassend eine Rührvorrichtung, die an die Brühkammer (110) gekoppelt ist, um das Mahlgut und Heißwasser in der Brühkammer (110) zu rühren.

10. System nach Anspruch 1, ferner umfassend:
eine luftdichte Verbindung zwischen der Brühkammer (110) und der Extraktionskammer (120), wobei die Verbindung durch Bewegung entlang nur einer einzigen Achse von einer gekoppelten Konfiguration in eine ungekoppelte Konfiguration abänderbar ist.

11. System nach Anspruch 10, ferner umfassend einen Verriegelungsmechanismus, der positioniert ist, um die luftdichte Verbindung in der gekoppelten Konfiguration lösbar zu sichern.

12. Verfahren zum Brühen eines Getränks, umfassend:
Platzieren von Mahlgut in einer Brühkammer (110);
Platzieren eines ersten erhitzten Wasservolumens in der Brühkammer (110) und in Kontakt mit dem Mahlgut, um ein erstes Getränkevolumen zu bilden;
Anwenden einer Druckdifferenz zwischen der Brühkammer (110) und einer Extraktionskammer (120) von mindestens 8,0 kPa (60 Torr), um das erste Getränkevolumen aus der Brühkammer (110) durch ein Filterelement (130) zu extrahieren;
nach dem Entfernen des ersten Getränkevolumens aus der Brühkammer (110), Platzieren eines zweiten erhitzten Wasservolumens in der Brühkammer (110) in Kontakt mit dem Mahlgut, um ein zweites Getränkevolumen zu bilden; und
Anwenden einer Druckdifferenz zwischen der Brühkammer (110) und der Extraktionskammer (120) von mindestens 8,0 kPa (60 Torr), um das zweite Getränkevolumen aus der Brühkammer (110) durch das Filterelement (130) und in die Extraktionskammer (120) zu extrahieren, zum Mischen mit dem ersten Getränkevolumen.

13. Verfahren nach Anspruch 12, wobei das Mahlgut erstes Mahlgut ist und wobei das Verfahren ferner umfasst:
Trennen einer luftdichten Abdichtung entlang eines Fluidflusswegs, der die Brühkammer (110) und die Extraktionskammer (120) verbindet und beinhaltet;
Entfernen des ersten Mahlguts aus der Brühkammer (110);
Platzieren des zweiten Mahlguts in der Brühkammer (110); und
lösbares Verbinden der luftdichten Abdichtung entlang des Fluidflusswegs.

14. Verfahren nach Anspruch 13, wobei das Trennen das Bewegen der Brühkammer (110) weg von der Extraktionskammer (120) in einer ersten Richtung entlang einer allgemein horizontalen Achse beinhaltet und wobei das Verbinden das Bewegen der Brühkammer (110) hin zu der Extraktionskammer (120) in einer zweiten Richtung entgegen der ersten Richtung entlang der allgemein horizontalen Achse beinhaltet.

15. Verfahren nach Anspruch 13, wobei das Trennen das Bewegen der Brühkammer (110) weg von der Extraktionskammer (120) in einer ersten Richtung entlang einer allgemein vertikalen Achse beinhaltet und wobei das Verbinden das Bewegen der Brühkammer (110) hin zu der Extraktionskammer (120) in einer zweiten Richtung entgegen der ersten Richtung entlang der allgemein vertikalen Achse beinhaltet.

## Revendications

1. Système de préparation de boisson, comprenant :
une chambre de préparation (110) ;
une chambre d'extraction (120) ayant une capacité d'au moins 200 ml ;
un dispositif filtrant (130) positionné le long d'une voie d'écoulement de fluide et incluant la chambre de préparation (110) et la chambre d'extraction (120) ;
un dispositif de pression différentielle configuré pour appliquer une pression différentielle d'au moins 8,0 kPa (60 torr) entre la chambre de préparation (110) et la chambre d'extraction (120) ;
une source d'eau chaude accouplée à la chambre de préparation (110) ; et
un contrôleur programmé avec des instructions qui, lorsqu'elles sont exécutées :
durant un premier processus de préparation, diriger un premier volume d'eau chaude dans la chambre de préparation (110) et en contact avec un volume de marc pour former un premier volume de boisson ;
activer le dispositif de pression différentielle (105) pour forcer le premier volume de boisson hors de la chambre de préparation (110) ;
durant un second processus de préparation, réalisé après le retrait du premier volume de boisson de la chambre de préparation (110), diriger un second volume d'eau chaude dans la chambre de préparation (110) et en contact avec le volume de marc pour former un second volume de boisson ; et
activer le dispositif de pression différentielle (105) pour forcer le second volume de boisson dans la chambre de préparation (110) à aller dans la chambre d'extraction (120) pour qu'il se mélange au premier volume de boisson dans la chambre d'extraction (120).

2. Système selon la revendication 1, dans lequel :
les instructions, lorsqu'elles sont exécutées, dirigent le premier volume d'eau chaude en contact avec le volume de marc tout en empêchant le marc de quitter la chambre de préparation (110), et dirigent le second volume d'eau chaude en contact avec le volume de marc tout en empêchant le marc de quitter la chambre de préparation (110).

3. Système selon la revendication 2, dans lequel la chambre de préparation (110) est positionnée sous la chambre d'extraction (120) et le système comprenant en outre :
un conduit connectant la chambre de préparation (110) et la chambre d'extraction (120) ; et
une connexion rapide étanche aux liquides entre la chambre de préparation (110) et le conduit ;
et dans lequel :
la chambre de préparation (110) est mobile vers le conduit le long d'un axe généralement horizontal pour accoupler amovibles la chambre de préparation (110) et le conduit, et est mobile à l'écart du conduit le long de l'axe généralement horizontal pour désaccoupler la chambre de préparation (110) du conduit ;
et dans lequel en outre :
les instructions, lorsqu'elles sont exécutées, retiennent au moins un des premier et second volumes d'eau chaude dans la chambre de préparation (110) pendant une période allant de 5 secondes à 5 minutes avant que ceux-ci ne soient déplacés de la chambre de préparation (110).

4. Système selon l'une quelconque des revendications précédentes, comprenant en outre une connexion rapide étanche à l'air entre la chambre de préparation (110) et la chambre d'extraction (120).

5. Système selon la revendication 4, comprenant en outre un conduit connectant la chambre de préparation (110) et la chambre d'extraction (120), la connexion incluant un joint torique positionné entre la chambre de préparation (110) et le conduit.

6. Système selon la revendication 5, dans lequel la chambre de préparation (110) est mobile vers le conduit le long d'un axe généralement horizontal pour accoupler amovibles la chambre de préparation (110) et le conduit, et est mobile à l'écart du conduit le long de l'axe généralement horizontal pour désaccoupler la chambre de préparation (110) du conduit.

7. Système selon la revendication 5, dans lequel la chambre de préparation (110) est mobile vers le conduit le long d'un axe généralement vertical pour accoupler amovibles la chambre de préparation (110) et le conduit, et est mobile à l'écart du conduit le long de l'axe généralement vertical pour désaccoupler la chambre de préparation (110) du conduit.

8. Système selon l'une quelconque des revendications précédentes, dans lequel le dispositif filtrant inclut un élément de support réutilisable.

9. Système selon l'une quelconque des revendications précédentes, comprenant en outre un dispositif d'agitation accouplé à la chambre de préparation (110) pour agiter le marc et l'eau chaude dans la chambre de préparation (110).

10. Système selon la revendication 1, comprenant en outre :
une connexion étanche à l'air entre la chambre de préparation (110) et la chambre de préparation (120), la connexion pouvant être changée d'une configuration accouplée à une configuration désaccouplée par un déplacement le long d'un seul axe unique.

11. Système selon la revendication 10, comprenant en outre un mécanisme de verrouillage positionné de manière à fixer amovible la connexion étanche à l'air dans la configuration accouplée.

12. Procédé de préparation d'une boisson, consistant à :
placer du marc dans une chambre de préparation (110) ;
placer un premier volume d'eau chauffée dans la chambre de préparation (110) et en contact avec le marc pour former un premier volume de boisson ;
appliquer une pression différentielle d'au moins 8,0 kPa (60 torr) entre la chambre de préparation (110) et une chambre d'extraction (120) pour extraire le premier volume de boisson de la chambre de préparation (110) à travers un élément filtrant (130) ;
après le retrait du premier volume de boisson de la chambre de préparation (110), placer un second volume d'eau chauffée dans la chambre de préparation (110) en contact avec le marc pour former un second volume de boisson ; et
appliquer une pression différentielle d'au moins 8,0 kPa (60 torr) entre la chambre de préparation (110) et la chambre d'extraction (120) pour extraire le second volume de boisson de la chambre de préparation (110) à travers l'élément filtrant (130) et dans la chambre d'extraction (120) pour le mélanger avec le premier volume de boisson.

13. Procédé selon la revendication 12, dans lequel le marc est du premier marc, et le procédé consistant en outre à :
déconnecter un joint étanche à l'air le long d'une voie d'écoulement de fluide rejoignant et incluant la chambre de préparation (110) et la chambre d'extraction (120) ;
retirer le premier marc de la chambre de préparation (110) ;
placer du second marc dans la chambre de préparation (110) ; et
connecter amovible le joint étanche à l'air le long de la voie d'écoulement de fluide.

14. Procédé selon la revendication 13, dans lequel la déconnexion consiste à déplacer la chambre de préparation (110) à l'écart de la chambre d'extraction (120) dans une première direction le long d'un axe généralement horizontal, et dans lequel la connexion consiste à déplacer la chambre de préparation (110) vers la chambre d'extraction (120) dans une seconde direction opposée à la première direction le long de l'axe généralement horizontal.

15. Procédé selon la revendication 13, dans lequel la déconnexion consiste à déplacer la chambre de préparation (110) à l'écart de la chambre d'extraction (120) dans une première direction le long d'un axe généralement vertical, et dans lequel la connexion consiste à déplacer la chambre de préparation (110) vers la chambre d'extraction (120) dans une seconde direction opposée à la première direction le long de l'axe généralement vertical.
